# NEUE EUROPÄISCHE PATENTSCHRIFT

(11) **EP 1 182 062 B2**
(45) Veröffentlichungstag und Bekanntmachung des Hinweises auf die Entscheidung über den Einspruch: **10.12.2014**
(45) Hinweis auf die Patenterteilung: 27.10.2004
(21) Anmeldenummer: 01128747.1
(22) Anmeldetag: 07.10.1999
(51) Int. Cl.: B60D 1/52, B60D 1/54

(54) **Anhängekupplung**
Trailer coupling
Attelage de remorque

(30) Priorität: 21.10.1998 DE 19848487
(43) Veröffentlichungstag der Anmeldung: 27.02.2002
(62) Teilanmeldung aus: 99948968.5
(73) Patentinhaber: SCAMBIA Industrial Developments Aktiengesellschaft, 9494 Schaan (LI)
(72) Erfinder: Riehle, Hans, 71638 Ludwigsburg (DE)
(74) Vertreter: Hoeger, Stellrecht & Partner Patentanwälte

(56) Entgegenhaltungen:
- EP-A- 0 288 366
- WO-A-91/15374
- WO-A-97/10111
- WO-A-97/37862
- WO-A1-97/36760
- DE-A- 19 612 959
- DE-A1- 3 328 524
- DE-A1- 4 312 208
- DE-A1- 19 521 896
- DE-A1- 19 612 962
- DE-A1- 19 651 562
- DE-C1- 4 413 985
- DE-C2- 19 605 570
- DE-T2- 69 714 939
- DE-U1- 8 716 502
- DE-U1- 9 105 268
- FR-A- 2 227 739
- FR-A- 2 450 167

## Beschreibung

Die Erfindung betrifft eine Anhängekupplung für Kraftfahrzeuge, umfassend ein fahrzeugfest angeordnetes Lagerteil und ein am Lagerteil gelagertes Schwenkteil mit einem Kugelhals und mit einer Kupplungskugel, welches gegenüber dem Lagerteil um eine Schwenkachse zwischen einer Ruhestellung und einer Arbeitsstellung schwenkbar ist.

Eine Anhängekupplung nach dem Oberbegriff des Anspruch 1 ist bereits in der deutschen Patentanmeldung DE-195 21 896 beschrieben.

Der Erfindung liegt die Aufgabe zugrunde, eine Anhängekupplung der gattungsgemäßen Art derart zu schaffen, daß diese in der Arbeitsstellung sicher und einfach fixierbar ist.

Diese Aufgabe wird bei einer Anhängekupplung der eingangs beschriebenen Art erfindungsgemäß durch die Merkmale des Anspruchs 1 gelöst. Gemäß der Erfindung, sind zum Fixieren des Kugelhalses in der Arbeitsstellung die Anschlagelemente und die Stützelemente in einer Spannstellung gegeneinander verspannbar sind, wobei durch das zusätzliche Gegeneinanderverspannen der Paare aus jeweils einem der Anschlagelemente und Stützelemente die Möglichkeit geschaffen ist, selbst bei Materialdeformation aufgrund auftretender Lastspitzen die Spielfreiheit zu gewährleisten und somit auch die größte Verschleißarmut bei der Fixierung des Schwenkteils relativ zum Lagerteil zu erhalten.

Dadurch, daß in der Spannstellung das Stützelement eines Paares aus jeweils einem der Stützelemente und Anschlagelemente in Spannkraftrichtung nachstellend auf das andere Element wirkt, ist der Vorteil dieser Lösung darin zu sehen, daß einerseits durch die Kraftbeaufschlagung ein Verspannen der Stützelemente und Anschlagelemente gegeneinander möglich ist und andererseits durch das Nachstellen mindestens eines Elements erreicht wird, daß selbst dann, wenn das andere Element aufgrund von Materialelastizitäten beim Auftreten einer Spitzenlast in Richtung der Spannkraftwirkung ausweichen würde, das eine Element aufgrund seines Nachstellens die Spannkraftwirkung auf das andere Element aufrecht erhält und somit auch selbst bei einer elastischen Deformation im Bereich von Schwenkteil und Lagerteil und/oder des anderen Paares von jeweils einem der Stützelemente und Anschlagelemente und dadurch bedingtem Ausweichen des anderen Elements die Kraftbeaufschlagung und die Spielfreiheit bei allen Stützelementen und Anschlagelementen aufrecht erhalten wird.

Dadurch, daß beim Schwenken des Schwenkteils um die Achse jedes der Anschlagelemente auf einer radial beabstandeten Bahn um die Schwenkachse umläuft, ist es nicht notwendig, den Anschlagelementen eine eigene Bewegbarkeit zu verleihen, sondern die Anschlagelemente können unmittelbar mit dem Schwenkteil verbunden und mit diesem verschwenkbar angeordnet sein.

Da eine Betätigungseinrichtung auch das Verspanngetriebe umfaßt, ist bei Bedienen der Betätigungseinrichtung nicht nur das Bewegen des Stützelements zwischen der Sperrstellung und der Freigabestellung möglich, sondern auch das Bewegen desselben von der Spannstellung in die Lösestellung und umgekehrt.

Besonders leicht läßt sich die erfindungsgemäße Anhängekupplung dadurch betätigen, daß die Betätigungseinrichtung ein einziges Antriebselement aufweist, bei dessen Betätigung das Stützelement, in jede der die Freigabestellung, die Sperrstellung, die Lösestellung und die Spannstellung umfassenden Stellungen bringbar ist.

Ein Verspanngetriebe kann in unterschiedlichster Art und Weise ausgebildet sein. Beispielsweise könnte das Verspanngetriebe so ausgebildet sein, daß es sich auch bei der auf dieses wirkenden Reaktionskraft beim Verspannen der Anschlagelemente und Stützelemente miteinander aus der verspannenden Stellung entgegengesetzt hierzu in Richtung der Lösestellung bewegen kann.

Besonders günstig ist es jedoch, insbesondere um dauerhaft das Auftreten von Spiel zu vermeiden, wenn das Verspanngetriebe selbsthemmend ausgebildet ist, so daß die Reaktionskraft der aneinander anliegenden Anschlagelemente und Stützelemente nicht dazu führen kann, daß sich das Verspanngetriebe aufgrund dieser Kraftwirkung in Richtung der Lösestellung verstellt.

Erfindungsgemäß ist vorgesehen, daß das Verspanngetriebe zu realisieren wäre die, daß das Verspanngetriebe als Keilgetriebe ausgebildet ist. Ein Keilgetriebe stellt die einfachste Realisierungsmöglichkeit eines Verspanngetriebes dar, insbesondere wenn dieses selbsthemmend ausgebildet sein soll.

Konstruktiv besonders einfach läßt sich dabei ein Keilgetriebe realisieren, welches als Verschiebekeilgetriebe ausgebildet ist.

Hinsichtlich der Wirkung des Verspanngetriebes beim Verspannen der Anschlagelemente und Stützelemente relativ zueinander wurden bislang keine näheren Angaben gemacht. So wäre es beispielsweise denkbar, beide Verspannelemente oder beide Stützelemente durch das Verspanngetriebe relativ zueinander somit aufeinander zu oder voneinander weg durch ein Verspanngetriebe zu bewegen.

Beispielsweise wäre dies dadurch möglich, daß eine durch das Spanngetriebe mögliche Relativbewegung zwischen der Einheit aus Schwenkteil und Kugelhals und dem Lagerteil durch das Verspanngetriebe ermöglicht wird.

Erfindungsgemäß sind die Stützelemente am Lagerteil angeordnet sind, wenn durch das Verspanngetriebe eines der Stützelemente in Richtung des entsprechenden Anschlagelements bewegbar ist.

Im Fall des Keilgetriebes, insbesondere eines Verschiebekeilgetriebes, heißt dies, daß ein Spannkeil mit dem Stützelement zusammenwirkt, um dieses von der Lösestellung in die Spannstellung zu bewegen.

Eine bevorzugte Ausführungsform einer derartigen Betätigungseinrichtung sieht vor, daß diese zum Fixieren des Schwenkteils in der Arbeitsstellung das Stützelement, von der Freigabestellung in die Sperrstellung bewegt und nach Erreichen der Sperrstellung das Verspanngetriebe von der Lösestellung in die Spannstellung überführt und zum Freigeben des Schwenkteils das Verspanngetriebe von der Spannstellung in die Lösestellung überführt und dann das bewegbare Element von der Sperrstellung in die Freigabestellung bewegt.

Vorzugsweise ist die Betätigungseinrichtung so ausgebildet, daß sie das bewegbare Element zwangsgesteuert von der Freigabestellung in die Sperrstellung und insbesondere auch umgekehrt bewegt.

Ferner ist es vorteilhaft, wenn die Betätigungseinrichtung auch das Verspanngetriebe zwangsgesteuert von der Lösestellung in die Spannstellung und insbesondere auch umgekehrt bewegt.

Alle zwangsgesteuerten Bewegungen haben den Vorteil, daß mit diesen sichergestellt werden kann, daß eine Betätigung der Betätigungseinrichtung dann letztlich auch dazu führt, daß die erwünschte Endstellung auch erreicht wird.

Insbesondere ist eine Zwangssteuerung auch dann vorteilhaft, wenn von der Spannstellung in die Lösestellung übergegangen werden kann, da damit auch ein Festklemmen des jeweiligen bewegbare Elements, beispielsweise des Stützelement, überwunden werden kann.

Die erfindungsgemäß Lösung sieht vor, daß die Betätigungseinrichtung zwei nacheinander in eine auf das Stützelement wirkende Stellung bringbare Keilelemente aufweist, wobei eines der Keilelemente zum Überführen des Stützelements von der Freigabestellung in die Sperrstellung und das andere der Keilelemente zum Überführen des Stützelements von der Lösestellung in die Spannstellung dient.

Um eine für das Bedienen der Betätigungseinrichtung zum Erreichen der Sperrstellung und der Spannstellung erforderliche Kraft zu erzeugen, ist vorzugsweise eine Spannkrafterzeugungseinheit vorgesehen, welche mit der Betätigungseinrichtung zusammenwirkt und welche die Betätigungseinrichtung im Sinne einer Betätigung in Richtung der Sperrstellung des bewegbaren Elements, beispielsweise des Stützelement, und der Spannstellung des Verspanngetriebes mit einer Kraft beaufschlagt.

Der Vorteil dieser Lösung ist, daß durch die Kraft ständig die Betätigungseinrichtung derart beaufschlagt ist, daß diese die Tendenz hat, in die Sperrstellung und sogar noch darüber hinaus in die Spannstellung überzugehen, so daß die Anhängekupplung stets selbständig die Tendenz hat, in eine den Kugelhals sicher fixierende Stellung überzugehen, sobald dieser in Arbeitsstellung steht.

Vorzugsweise ist dabei die Spannkrafterzeugungseinheit so ausgebildet, daß sie einen Kraftspeicher aufweist, welcher die Betätigungseinrichtung zum Erreichen der Sperrstellung und der Spannstellung beaufschlagt und welchem zum Erreichen der Lösestellung und der Freigabestellung entgegenzuwirken ist.

Um zusätzliche Sicherheit gegen ein Lösen der Anhängevorrichtung und insbesondere ein Entfernen des bewegbaren Elements, beispielsweise des Stützelement, aus der Sperrstellung zu schaffen ist vorzugsweise vorgesehen, daß die Spannkrafterzeugungseinheit mit einer Blockiereinrichtung versehen ist, welche bei einer Nichtbetätigung derselben um dem Spannkraftspeicher entgegenzuwirken, ein Verlassen der Sperrstellung in Richtung der Freigabestellung blockiert.

Vorzugsweise ist die Blockiervorrichtung dabei so ausgebildet, daß sie zuerst gelöst werden muß, bevor die Möglichkeit besteht, dem Spannkraftspeicher entgegenzuwirken.

Eine besonders günstige konstruktive Lösung sieht vor, daß die Blockiereinrichtung bei Betätigung der Spannkrafterzeugungseinheit zum Erreichen der Freigabestellung lösbar ist und somit automatisch eine derartige Bewegung in Richtung der Freigabestellung bei Betätigung der Spannkrafterzeugungseinheit möglich ist.

Um die Bedienung der Spannkrafterzeugungseinheit möglichst vorteilhaft zu gestalten, ist vorzugsweise vorgesehen, daß die Spannkrafterzeugungseinheit ein Bedienelement aufweist, mit welchem zuerst die Blockiereinrichtung lösbar und dann mit einer Entriegelungskraft auf die Betätigungseinrichtung einwirkbar ist.

Mit dieser Ausbildung der Spannkrafterzeugungseinheit ist die Möglichkeit geschaffen worden, eine zusätzliche Sicherung gegen ein Lösen des bewegbaren Stützelements aus der Sperrstellung zu schaffen.

Hinsichtlich der Anordnung der Betätigungseinrichtung an dem Lagerteil wurden im Zusammenhang mit der bisherigen Erläuterung der einzelnen Ausführungsbeispiele keine näheren Angaben gemacht. So wäre es beispielsweise denkbar, die verschiedenen Elemente der Betätigungseinrichtung in unterschiedlicher Weise beispielsweise am Lagerteil zu lagern.

Eine besonders günstig Lösung sieht jedoch vor, daß die Betätigungseinrichtung und das bewegbare Stützelement eine Baugruppe bildet, die als Ganzes an dem Lagerteil montierbar ist.

Das Vorsehen einer separaten, am Lagerteil zu montierenden und von diesem unabhängigen Baugruppe schafft ferner die Möglichkeit, die Betätigungseinrichtung mitsamt dem bewegbaren Element, beispielsweise dem Stützelement, an dem Lagerteil justierbar anzuordnen, so daß die Möglichkeit besteht, mit der Montage der Betätigungseinrichtung eine gleichzeitige Justierung derselben und mit dieser eine Justierung des von dieser gehaltenen Stützelements relativ zum Lagerteil vorzunehmen.

Eine besonders vorteilhafte erfindungsgemäße Lösung sieht vor, daß das Schwenkteil zwei im Abstand voneinander angeordnete Anschlagelemente aufweist, daß das Lagerteil mit zwei Stützelementen versehen ist und daß zum Fixieren des Kugelhalses in der Arbeitsstellung eines der Stützelemente und eines der Anschlagelemente im Sinne einer Schwenkbewegung des Kugelhalses in einer ersten Richtung zusammenwirken, welcher das andere der Stützelemente und das andere der Anschlagelemente entgegenwirken, und daß hierbei die Anschlagelemente und die Stützelemente spielfrei gegeneinander anlegbar sind.

Der Vorteil der erfindungsgemäßen Lösung ist darin zu sehen, daß durch das Vorsehen von zwei zusammenwirkenden Paaren aus Anschlagelementen und Stützelementen die Möglichkeit gegeben ist, diese paarweise spielfrei aneinander anzulegen und dadurch eine dauerhaft spielfreie und somit auch dauerhaft verschleißarme Fixierung des Schwenkteils relativ zum Lagerteil zu erhalten, wobei sich gezeigt hat, daß durch das spielfreie Aneinanderanliegen der zusammenwirkenden Paare aus jeweils einem der Anschlagelemente und Stützelemente höchste Verschleißarmut im Bereich derselben und somit auch bei der Fixierung des Schwenkteils erreichbar ist.

Besonders günstig läßt sich die Kraftbeaufschlagung eines Elements eines aus einem Stützelement und einem Anlageelement gebildeten Paars dadurch realisieren, daß in der Spannstellung auf eines der Elemente ein elastischer Spannkraftspeicher wirkt.

Besonders günstig ist dies dann, wenn der elastische Spannkraftspeicher als Federkraftspeicher ausgebildet ist.

Ferner läßt sich die Nachstellbarkeit des einen Elements dann besonders günstig realisieren, wenn dieses in Spannrichtung bewegbar gelagert ist.

Eine derartige bewegbare Lagerung eines der Elemente läßt sich entweder durch eine lineare Bewegbarkeit desselben oder mit einer aus einer Drehbewegung abgeleiteten linearen Bewegbarkeit des Elements realisieren.

Besonders günstig ist es dabei, wenn die Anschlagelemente auf unterschiedlichen Bahnen um die Schwenkachse umlaufen, das heißt, wenn jedes der Anschlagelemente seine eigene Bahn hat, mit welcher es um die Schwenkachse umläuft. Damit ist in räumlicher Hinsicht eine besonders einfache Zuordnung der einzelnen Anschlagelemente hinsichtlich der mit diesen korrespondieren Stützelemente realisierbar.

Prinzipiell wäre es denkbar, auch die Anschlagelemente relativ zum Schwenkteil noch zusätzlich bewegbar zu gestalten, beispielsweise um das spielfreie Aneinanderanliegen der Anschlagelemente und der Stützelemente zu erreichen. Konstruktiv besonders einfach ist es jedoch, wenn ein erstes der Anschlagelemente als fest am Schwenkteil angeordnetes Element ausgebildet ist.

Noch vorteilhafter ist es, wenn auch das zweite der Anschlagelemente als fest am Schwenkteil angeordnetes Element ausgebildet ist.

Um einen möglichst großen Hebelarm zwischen der Achse, um welche das Schwenkteil schwenkbar ist, und dem jeweiligen Anschlagelement, das heißt dem Wirksamwerden der auf dieses wirkenden Kraft, zu erreichen, ist vorzugsweise vorgesehen, daß eines der Anschlagelemente an einem Kamm des Schwenkteils angeordnet ist, welcher von der Schwenkachse einen größeren Abstand aufweist als beispielsweise ein Lagerkörper des Schwenkteils, welcher einen Schwenkzapfen umgibt.

Um ferner ebenfalls die Tatsache auszunutzen, daß sich der Kugelhals von dem Schwenkteil weg erstreckt und sich somit zwangsläufig mit zunehmendem Radius von der Achse erstreckt, ist vorzugsweise vorgesehen, daß ein anderes der Anschlagelemente an einem sich an das Schwenkteil anschließenden Ansatz des Kugelhalses angeordnet ist.

Auch hinsichtlich der Anordnung der Stützelemente selbst wurden im Zusammenhang mit der bisherigen Erläuterung der einzelnen Ausführungsbeispiele keine näheren Angaben gemacht. So sieht ein vorteilhaftes Ausführungsbeispiel vor, daß ein erstes der Stützelemente in einem in Fahrtrichtung gesehenen rückwärtigen Bereich des Lagerteils angeordnet ist.

Ferner ist bei einem Ausführungsbeispiel vorzugsweise vorgesehen, daß ein zweites der Stützelemente in einem in Fahrtrichtung gesehen vorderen Bereich des Lagerteils angeordnet ist, während bei einem anderen Ausführungsbeispiel auch das zweite Stützelement im rückwärtigen Bereich des Lagerteils angeordnet ist.

Hinsichtlich der Bewegbarkeit der Stützelemente sind die unterschiedlichsten Lösungen denkbar. Beispielsweise wäre es denkbar, beide Stützelemente in Richtung auf die Anschlagelemente oder beide Anschlagelemente in Richtung auf die Stützelemente zu bewegen.

Eine besonders aufgrund ihrer konstruktiven Einfachheit bevorzugte Lösung sieht dabei vor, daß eines der Stützelemente als stets in die Bahn des entsprechenden Anschlagelements hineinragendes Stützelement am Lagerteil angeordnet ist und somit beispielsweise stets dann von dem Anschlagelement beaufschlagt ist, wenn dieses in der Arbeitsstellung steht.

Um gleichzeitig aber die Chance zu eröffnen, den Kugelhals von der Arbeitsstellung in die Ruhestellung schwenken zu können und wieder zurück, ist vorgesehen, daß ein anderes der Stützelemente als von einer Freigabestellung in die Bahn des anderen Anschlagelements hinein bis zu einer Sperrstellung und umgekehrt bewegbares Stützelement am Lagerteil angeordnet ist.

Hinsichtlich der Bewegbarkeit des Stützelements von der Freigabestellung in die Sperrstellung sind die unterschiedlichsten Möglichkeiten denkbar. Eine Lösung sieht vor, daß das bewegbare Stützelement durch eine Linearverschiebung in die Bahn des Anschlagelements hineinbewegbar ist.

Eine andere bevorzugte Ausführungsform sieht vor, daß das bewegbare Stützelement in die Bahn des entsprechenden Anschlagelements hineinschwenkbar ist.

Hinsichtlich der gesamten Bewegbarkeit eines relativ zu der Bahn des entsprechenden Anschlagelements zwischen einer Sperrstellung und einer Freigabestellung bewegbaren Stützelements wurden bislang keine näheren Angaben gemacht. So ist vorzugsweise eine Betätigungseinrichtung für das Stützelement vorgesehen, welche dazu dient, das Stützelement für diese Bewegungen zu lagern und zu beaufschlagen.

Eine Realisierungsform einer derartigen Betätigungseinrichtung umfaßt einen Stellkeil, um das in einer Führung bewegbar geführte Stützelement zwischen der Sperrstellung und der Freigabestellung zu bewegen.

Eine andere vorteilhafte Lösung sieht vor, daß die Betätigungseinrichtung ein Schwenklager und einen Schwenkantrieb für das bewegbare Stützelement umfaßt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels von hinten;
- Fig. 2: einen Schnitt längs Linie 2-2 in Fig. 1;
- Fig. 3: einen Schnitt längs Linie 3-3 in Fig. 1;
- Fig. 4: einen ausschnittsweise vergrößerten Schnitt in dem Bereich A in Fig. 3;
- Fig. 5: einen Längsschnitt durch eine Spannkrafterzeugungseinheit des ersten Ausführungsbeispiels in nicht betätigter Stellung;
- Fig. 6: einen Querschnitt ähnlich Fig. 5 bei beginnender Betätigung der Spannkrafterzeugungseinheit;
- Fig. 7: einen Schnitt ähnlich Fig. 5 bei voll betätigter Spannkrafterzeugungseinheit;
- Fig. 8: eine perspektivische Ansicht eines zweiten, nicht unter den Anspruch 1 fallenden Ausführungsbeispiels einer erfindungsgemäßen Anhängekupplung von vorne;
- Fig. 9: eine perspektivische Ansicht des zweiten Ausführungsbeispiels in Richtung des Pfeils B in Fig. 8;
- Fig. 10: eine Darstellung eines Lagerteils des zweiten Ausführungsbeispiels entsprechend der Ansicht in Fig. 9;
- Fig. 11: eine Darstellung des zweiten Ausführungsbeispiels der Anhängekupplung ohne Lagerteil mit Blick in Richtung C in Fig. 1 bei in Arbeitsstellung stehendem Kugelhals;
- Fig. 12: eine perspektivische Darstellung ähnlich Fig. 8 des zweiten Ausführungsbeispiels der Anhängekupplung ohne Lagerteil, jedoch in Freigabestellung des zweiten Stützelements;
- Fig. 13: einen Schnitt längs Linie 13-13 in Fig. 12;
- Fig. 14: eine Darstellung ähnlich Fig. 12 bei in Sperrstellung und Spannstellung stehendem zweiten Stützelement;
- Fig. 15: eine perspektivische Darstellung ähnlich Fig. 14 bei in Lösestellung, jedoch noch in Sperrstellung stehendem zweiten Stützelement;
- Fig. 16: eine Ansicht ähnlich Fig. 15 nach Verlassen der Arbeitsstellung des Kugelhalses und durch die Spannkrafterzeugungseinheit beaufschlagtem zweitem Stützelement;
- Fig. 17: eine Darstellung ähnlich Fig. 16 bei in Ruhestellung stehendem Kugelhals und in entsprechender Stellung stehendem Stützelement und
- Fig. 18: eine perspektivische Darstellung ähnlich Fig. 14 beim Bewegen des zweiten Stützelements in Richtung der Sperrstellung, jedoch unmittelbar vor Erreichen derselben und noch vorhandener Lösestellung des zweiten Stützelements.

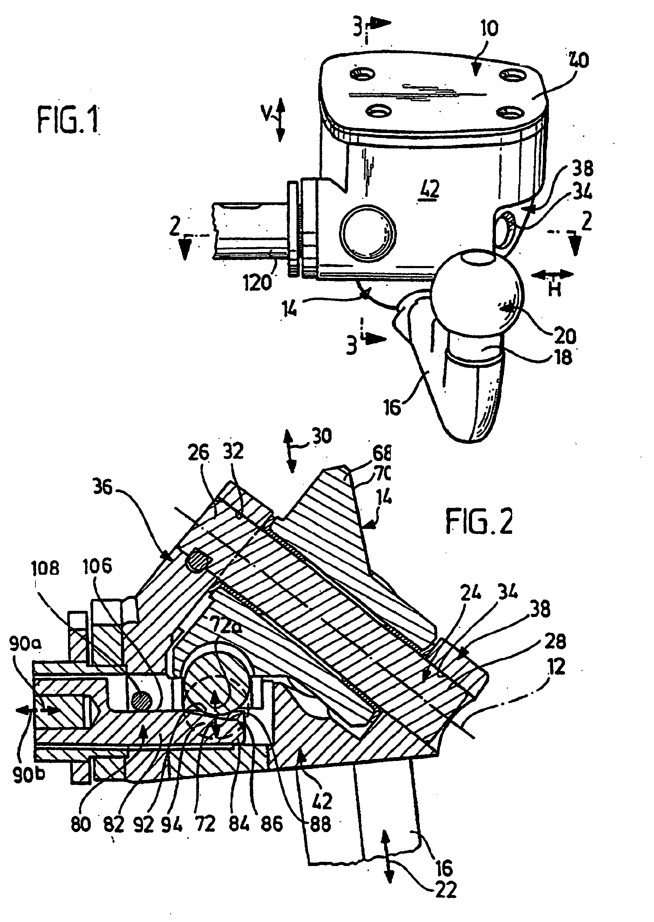

Ein erstes Ausführungsbeispiel einer erfindungsgemäßen Anhängekupplung, dargestellt in den Fig. 1 bis 3, umfaßt ein fest am Fahrzeug montierbares Lagerteil 10, welches beispielsweise an einer fest mit der Karosserie zu verbindenden Querstrebe montierbar ist und ein um eine Schwenkachse 12 relativ zum Lagerteil 10 verschwenkbares Schwenkteil 14, an welchem ein Kugelhals 16 gehalten ist, der an seinem dem Schwenkteil 14 abgewandten und gekrümmten Ende 18 eine als Ganzes mit 20 bezeichnete Kupplungskugel trägt.

Die Schwenkachse 12 ist dabei eine sowohl gegenüber einer Vertikalen V als auch gegenüber einer Horizontalen H und einer Fahrzeuglängsrichtung 30 geneigte Achse, beispielsweise wie in der deutschen Patentanmeldung 196 12 959.1 beschrieben.

Dadurch ist der Kugelhals 16, von einer Arbeitsstellung, in welcher sich dessen Längsrichtung 22 ungefähr parallel zur Längsrichtung 30 des Kraftfahrzeugs erstreckt in eine Ruhestellung schwenkbar, in welcher die Längsrichtung 22 ungefähr quer zur Längsrichtung 30 des Fahrzeugs steht und die Kupplungskugel 20 nach unten zur Fahrbahn weist, während in der Arbeitsstellung die Kupplungskugel 20 aufgrund des gekrümmten Endes 18 des Kugelhalses 16 in bekannter Art und Weise nach oben weist.

Zur verschwenkbaren Lagerung des Schwenkteils 14 um die Schwenkachse 12 ist dieses an einem Lagerbolzen 24 gelagert, welcher mit seinen einander gegenüberliegenden Enden 26 und 28 in Lagerbohrungen 32 und 34 von Lagerflanschen 36 und 38 des Lagerteils 10 eingreift. Diese Lagerflansche 36 und 38 erstrecken sich ausgehend von einer Montageplatte 40 des Lagerteils 10 nach unten, vorzugsweise in Richtung zur Fahrbahn und sind durch eine Rückwand 42 des Lagerteils 10, welche sich ebenfalls von der Montageplatte 40 in gleicher Richtung wie die Lagerflansche 36 und 38 erstreckt, miteinander verbunden.

Aufgrund der Ausrichtung der Schwenkachse 12 schräg zur Längsrichtung 30 des Kraftfahrzeugs und schräg zur Vertikalen V und zur Horizontalen H erstrecken sich auch die Lagerflansche 36 und 38 schräg zur Längsrichtung 30 des Kraftfahrzeugs.

Zur Fixierung des Kugelhalses 16 in der in Fig. 1 bis 3 dargestellten Arbeitsstellung, ist an dem Lagerteil 10, und zwar in einem unteren Bereich der Rückwand 42 desselben, ein erstes Stützelement 50 vorgesehen, welches eine erste Stützfläche 52 aufweist, die dem in Arbeitsstellung stehenden Kugelhals 16 zugewandt ist und an welcher eine erste Anschlagfläche 54 anlegbar ist, welche an einem als erstes Anschlagelement ausgebildeten und dem Stützelement 50 in der Arbeitsstellung zugewandten Ansatz 56 des Kugelhalses, welcher sich im wesentlichen unmittelbar an das Schwenkteil 14 anschließt, angeordnet ist und auch einer Bahn 55 um die Schwenkachse 12 bewegbar ist.

Das erste Stützelement 50 und das erste Anschlagelement 56 begrenzen somit eine Schwenkbewegung des Kugelhalses 16 in Richtung einer Schwenkrichtung 58 um die Schwenkachse 12, welcher der Schwenkrichtung 58 des Kugelhalses 16 von der Ruhestellung in die Arbeitsstellung entspricht.

Als zweites, am Lagerteil 10 angeordnetes Stützelement 60 dient eine am Lagerteil 10 verschieblich geführt gelagerte Verriegelungskugel 60, welche mit einer Kugelfläche 62 als zweite Stützfläche auf eine zweite kalottenähnlich ausgebildete Anschlagfläche 64 einer in dem Schwenkteil 14 angeordneten und ein zweites Anschlagelement bildenden Ausnehmung 66 wirkt, wobei die Ausnehmung 66 in einem Kammbereich 68 des Schwenkteils 14 angeordnet ist, welcher einen möglichst großen radialen Abstand von der Schwenkachse 12 aufweist und auf einer Bahn 65, die einen größeren Radius aufweist als die Bahn 55, um die Schwenkachse bewegbar ist.

Vorzugsweise umfaßt das Schwenkteil 14 einen den Lagerbolzen 24 umgebenden Lagerkörper 71 und einen von diesem aus sich radial erstreckenden kegelstumpfähnlichen Abschnitt, welcher den Kammbereich 68 bildet, wobei in einer Kegelmantelfläche 70 des kegelstumpfähnlichen Abschnitts die Ausnehmung 66 angeordnet ist.

Die zweite Stützfläche 62 verläuft dabei vorzugsweise schräg zu einer Bewegungsrichtung 72 des vorzugsweise linear bewegbaren als Verriegelungskugel 60 ausgebildeten zweiten Stützelements und liegt an einem ebenfalls schräg zur Bewegungsrichtung verlaufenden Bereich der Kugelfläche 74 der Verriegelungskugel 60 an, wobei die Anschlagfläche 64 und die Stützfläche 62 so zusammenwirken, daß das Schwenkteil 14 nach einer ersten Berührung der Anschlagfläche 64 und der Stützfläche 62 und Weiterbewegen der Verriegelungskugel 60 in einer Spannrichtung 72a auf die Anschlagfläche zu ein derartiges Drehmoment um die Achse 12 erfährt, welches eine Bewegung des Kugelhalses 14 in der Schwenkrichtung 58 bewirkt, die durch das erste Stützelement 50 und das erste Anschlagelement 56 dann begrenzt verhindert wird, wenn diese aneinander anliegen.

In dem Moment, in dem das erste Stützelement 50 und das erste Anschlagelement 56 aneinander Anliegen und außerdem das zweite Stützelement, nämlich die Verriegelungskugel 60 mit einer Spannkraft in der Spannrichtung 72a auf das zweite Anschlagelement wirkt ist eine Spannstellung erreicht, in welcher die erste Stützfläche 52 an der ersten Anschlagfläche 54 und die zweite Stützfläche 62 an der zweiten Anschlagfläche mit der Spannkraft gegeneinander wirken.

Alles in allem wirken somit die Stützelemente 50 und 60 sowie die Anschlagelemente 56 und 66 gemeinsam derart, daß die erste Stützfläche 52 an der ersten Anschlagfläche 54 und die zweite Stützfläche 62 an der zweiten Anschlagfläche 64 stets spielfrei anliegen und den Kugelhals 16 spielfrei in seiner Arbeitsstellung halten, wobei - wie nachfolgend noch im einzelnen dargelegt - sogar ein Verspannen der Anschlagflächen 54, 64 gegenüber den Stützflächen 52, 62 erfolgt.

Um das als Verriegelungskugel 60 ausgebildete zweite Stützelement 60 in Richtung seiner Bewegungsrichtung 72 zu führen, ist eine Führungsbüchse 74 vorgesehen, welche am Lagerteil 10 fixiert ist und vorzugsweise in einer für diese vorgesehenen Ausnehmung in der Rückwand 42 eingesetzt ist.

Die Verriegelungskugel 60 ist durch eine als Ganzes mit 80 bezeichnete Betätigungseinrichtung, umfassend Verschiebekeilgetriebe, umfassend einen Keilkörper 82, von einer in Fig. 2 gestrichelt dargestellten Freigabestellung in der in Fig. 2 durchgezogen gezeichnete Sperrstellung bewegbar, wobei die Verriegelungskugel 60 in der Freigabestellung so weit von der Ausnehmung 66 weg verschoben ist, daß die Ausnehmung 66 auf ihrer durch die Schwenkachse 12 vorgegebenen Bahn 65 frei bewegbar ist, während die Verriegelungskugel 60 in der Sperrstellung in die Ausnehmung 66 eingreift und somit die Bewegung der Ausnehmung 66 längs der Bahn 65 blockiert.

Zum Verschieben der Verriegelungskugel 60 von der Freigabestellung in die Sperrstellung umfaßt der Keilkörper 82 einen frontseitig desselben angeordneten Stellkeil 84 mit einer Stellschräge 86, welche dazu dient, die Verriegelungskugel 60 von der Freigabestellung aus in eine Sperrstellung zu bewegen, welche bereits dann erreicht ist, wenn die Verriegelungskugel 60 auf einer Sicherungsfläche 88, aufliegt, die parallel zu einer Verschieberichtung 90 des Verschiebekeils 82 verläuft, im Gegensatz zu der schräg zur Verschieberichtung 90 verlaufenden Stellschräge 86. An diese Sicherungsfläche 88 schließt sich auf einer der Stellschräge 86 gegenüberliegenden Seite eine Spannschräge 92 eines Spannkeils 94 des Keilkörpers 82 an, welche dazu dient, die Verriegelungskugel 60 ausgehend von einer in der Sperrstellung vorliegenden Lösestellung, die dann gegeben ist, wenn die Stützfläche 62 noch mit Spiel bezüglich der Anschlagfläche 64 angeordnet ist, in der Spannrichtung 72a zu bewegen und dabei mit der Stützfläche 62 an der Anschlagfläche 64 anzulegen und darüber hinaus mit großer Kraft in der Spannrichtung 72a weiter zu beaufschlagen, so daß die Stützfläche 62 mit ebenfalls großer Kraft gegen die Anschlagfläche 64 wirkt und dieser so lange folgt, bis ein Verspannen des Schwenkteils 14 in der Arbeitsstellung des Kugelhalses 16 erreicht ist.

Die Sicherungsfläche 88 dient außerdem dazu, den Keilkörper 82 gegen eine Bewegung in der Verschieberichtung 90 zu sichern, in welcher der Verschiebekeil bei großer Belastung der Verriegelungskugel 60 ein Bewegen aus der Spannstellung heraus in Richtung der Lösestellung aufgrund der Form der Spannschräge 92 zuläßt. Wird aufgrund der Form der Spannschräge 92 durch große Kraftbeaufschlagung der Verriegelungskugel 60 durch das Schwenkteil 14 der Keilkörper 82 entgegengesetzt zur Spannrichtung 90a in Loserichtung 90b zurückgeschoben, so ist ein weiteres Zurückschieben des Verschiebekeils 82 aufgrund der Sicherungsfläche 88 nicht möglich, da ein Beaufschlagen derselben durch die Verriegelungskugel 60 aufgrund des zur Verschieberichtung 90 parallelen Verlaufs nicht zu einer weiteren Verschiebung des Keilkörpers 82 entgegengesetzt zur Spannrichtung führt. Damit hält der Keilkörper 82 bei auf der Sicherungsfläche 88 aufliegender Verriegelungskugel 60 diese immer noch in einer Sperrstellung, in welcher eine freie Drehbarkeit des Schwenkteils 14 durch die Kugel 60 verhindert wird, so daß nach wie vor der Kugelhals 16 die Arbeitsstellung nicht verlassen kann, lediglich in der Arbeitsstellung 16 nicht mehr spielfrei fixiert ist.

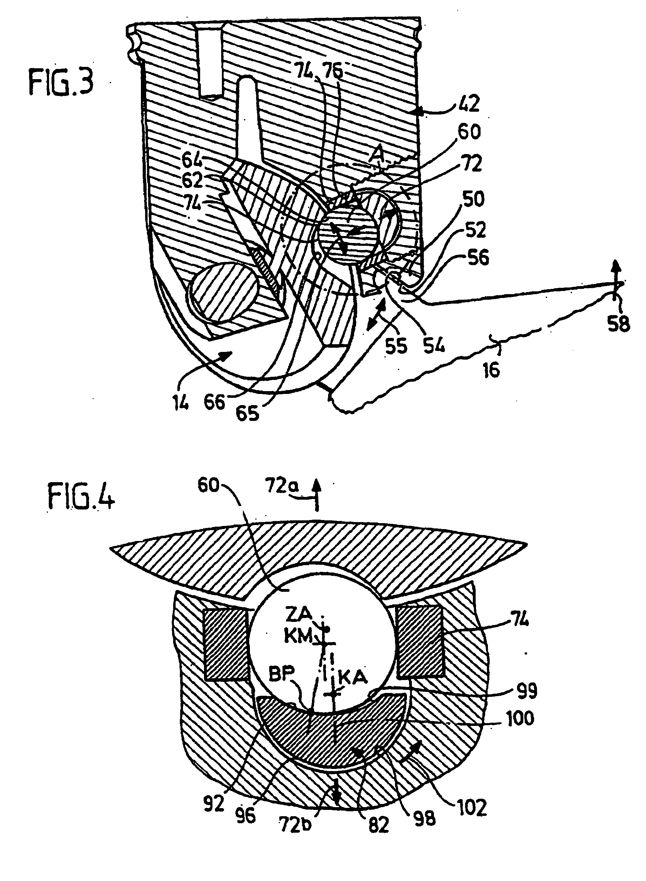

Um zu verhindern, daß der Keilkörper 82 durch die auf die Spannschräge 92 wirkende Verriegelungskugel 60 sich leicht entgegengesetzt zur Spannrichtung 90a verschieben läßt, ist vorzugsweise, wie in Fig. 4 dargestellt, der Keilkörper 82 auf seiner der Spannschräge 92, der Sicherungsfläche 88 und der Stellschräge 86 abgewandten Seite mit einer halbzylindrischen Anlagefläche 96 versehen, welche in einer ebenfalls halbzylindrisch ausgebildeten Führungsfläche 98 in der Rückwand 42 des Lagerteils 10 liegt, so daß der Keilkörper 82 die Möglichkeit hat, sich um eine eine Zylinderachse der Anlagefläche 96 und der Führungsfläche 98 darstellende Keilkörperachse KA, welche parallel zur Verschieberichtung 90 verläuft, zu drehen, sofern eine bezüglich der Keilachse KA asymmetrische Beaufschlagung des Verschiebekeils 82 erfolgt.

Die Spannschräge 92 ist ihrerseits ebenfalls als teilzylindrische Fläche 99 ausgebildet, welche einen Radius aufweist, der größer als der Radius der Verriegelungskugel 60 ist, wobei eine Zylinderachse ZA derselben gegenüber einer Mittelebene 100 des Verschiebekeils 82, welche durch die Keilachse KA hindurchverläuft, seitlich versetzt angeordnet ist.

Die Verriegelungskugel 60 wird im Gegensatz dazu von der Führungsbüchse 74 in der Bewegungsrichtung 72, mit dem Kugelmittelpunkt KM so geführt, daß der Kugelmittelpunkt KM gegenüber der Mittelebene 100 des Verschiebekeils 82 noch mehr seitlich versetzt ist als die Zylinderachse ZA, so daß auch ein Berührungspunkt BP zwischen der Verriegelungskugel 60 und der Fläche 99 seitlich der Mittelebene 100 liegt. Dadurch führt eine Beaufschlagung der Verriegelungskugel 60 in einer Richtung 72b von der Sperrstellung weg dazu, daß der Keilkörper 82 durch den Berührungspunkt BP seitlich der Mittelebene 100 beaufschlagt ist und somit aufgrund der Form der Anlagefläche 96 und der Führungsfläche 98 das Bestreben hat, sich um die Keilachse KA in Richtung 102 zu verdrehen.

Eine Sicherung des Keilkörpers 82 gegen ein Verdrehen erfolgt, wie in Fig. 2 dargestellt durch eine sich parallel Verschieberichtung 90 des Keilkörpers 82 erstreckende und auf einer der Sicherungsfläche 88 gegenüberliegende Seite der Spannschräge 92 angeordnete Flachseite 106 des Keilkörpers 82, welche an einem sich quer zur Verschieberichtung 90 über die Flachseite 106 erstreckenden Verdrehsicherungselement 108 in Form eines sich quer zur Verschieberichtung 90 erstreckenden Stiftes geführt ist und somit gegen ein Verdrehen gesichert ist.

Durch die Beaufschlagung des Keilkörpers 82 im Berührungspunkt BP und der dadurch bewirkten Tendenz des Keilkörpers 82 sich in Richtung 102 zu verdrehen legt sich die Flachseite 106 nicht mehr über ihre Breite quer zur Verschieberichtung 90 an dem Verdrehsicherungselement 108 an, sondern nur noch auf einer Seite, wodurch sich der Keilkörper 82 reibungserhöhend mit dem Verdrehsicherungselement 108 verkeilt so daß durch diese erhöhte Reibung ein Zurückgleiten des Keilkörpers 82 entgegengesetzt zur Spannrichtung 90a, das heißt in Richtung 90b, erschwert wird.

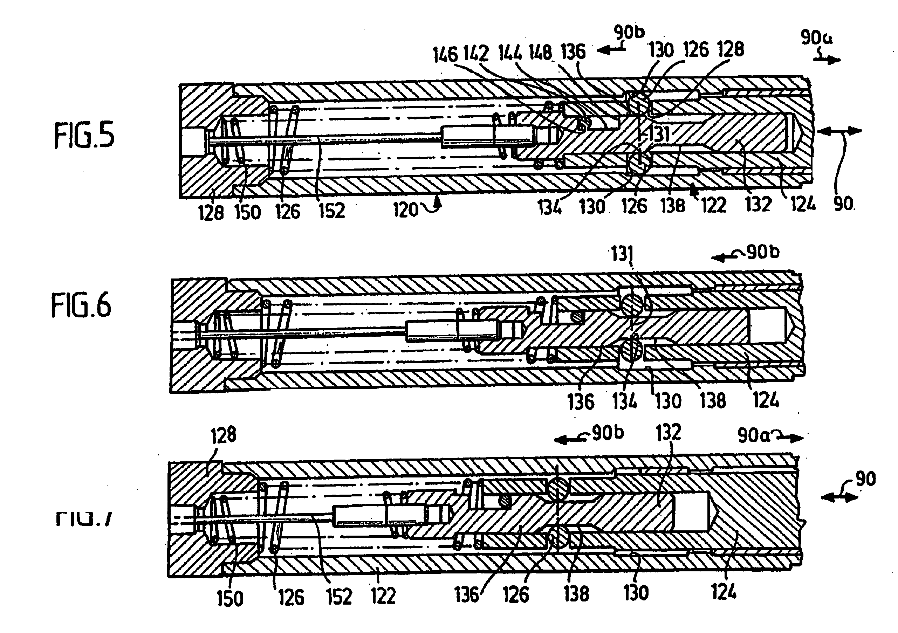

Zur Betätigung des Keilkörpers 82 und zur Erzeugung der in Spannrichtung 90a auf den Keilkörper 82 wirkenden Spannkraft ist durch seine in den Fig. 5 bis 7 dargestellte Spannkrafterzeugungseinheit 120 vorgesehen.

Die Spannkrafterzeugungseinheit 120 umfaßt ein Gehäuse 122, vorzugsweise ausgebildet als Gehäuserohr, in welchem ein Spannkörper 124 in der Richtung 90 verschiebbar gelagert ist.

Der Spannkörper 124 ist dabei von einer Spannfeder 126 beaufschlagt, welche sich an einem Gehäusedeckel 128 abstützt, der das Gehäuse 122 auf einer dem Spannkörper 124 gegenüberliegenden Seite verschließt.

Zur zusätzlichen Sicherung einer Bewegung des Spannkörpers 124 in einer zur Spannrichtung 90a entgegengesetzten Richtung ist dieser mit einem Satz von Sperrkörpern 127 versehen, welche in Querbohrungen 128 im Spannkörper 124 geführt und in diesen quer zur Verschieberichtung 90 des Verschiebekeils 82 bewegbar sind. Sind die Sperrkörper 127 so weit relativ zum Spannkörper 124 verschoben, daß sie in Richtung des Gehäuses 122 über diesen überstehen, so können sie in eine im Gehäuse 122 vorgesehene Tasche 130 eingreifen, und durch ihr Eingreifen in die Tasche 130 eine Bewegung des Spannkörpers 124 entgegengesetzt zur Spannrichtung 90a blockieren.

Um die Sperrkörper 127 in dieser die Bewegungen des Spannkörpers 124 blockierenden Stellung zu halten, ist in dem Spannkörper 124 ein Betätigungskörper 132 vorgesehen, an welchem die Sperrkörper 127 mit ihren dem Gehäuse 122 abgewandten Innenflächen 134 anliegen. Der Betätigungskörper 132 weist dabei einerseits Betätigungsflächen 136 auf, welche die Sperrkörper 127 in ihrer blockierenden, das heißt über den Spannkörper 124 überstehenden und in die Taschen 130 eingreifenden Stellung halten und im Anschluß an die Betätigungsfläche 136 angeordnete Freigabeflächen 138, welche gegenüber den Betätigungsflächen 136 in der Querrichtung 131 so weit zurückgesetzt sind, daß dann, wenn die Sperrkörper 127 mit ihren Innenflächen 134 an der Freigabefläche 136 anliegen, die Sperrkörper 127 nicht mehr über den Spannkörper 124 in Richtung des Gehäuses 122 überstehen und somit nicht mehr in die Taschen 130 eingreifen. In dieser Stellung des Betätigungskörpers 132 ist auch der Spannkörper 124 frei in der Verschieberichtung 90 bewegbar.

Der Betätigungskörper 132 ist nun relativ zum Spannkörper 124 begrenzt bewegbar, beispielsweise definiert durch einen Anschlagstift 142, welcher in einer sich in Verschieberichtung 90 erstreckenden Ausnehmung 144 im Betätigungskörper 132 eingreift und eine Verschiebbarkeit des Betätigungskörpers 132 relativ zum Spannkörper 124 zuläßt welche durch die Erstreckung der Ausnehmung 144 zwischen diese begrenzenden Anschlagflächen 146 und 148 definiert ist.

Ferner ist der Betätigungskörper 132 noch durch eine Stellfeder 150 ebenfalls in Richtung 90a beaufschlagt, welche dazu führt, daß der Betätigungskörper 132 stets die Tendenz hat, sich im Spannkörper 124 soweit in Richtung 90a zu bewegen, daß die Betätigungsflächen 136 auf die Sperrkörper 127 wirken und diese in ihre die Verschiebung des Spannkörpers 124 blockierende Stellung bewegen.

Wird jedoch beispielsweise mit einem Zugseil 152 auf den Betätigungskörper 132 in Richtung 90b, also entgegengesetzt zur Spannrichtung 90a, eingewirkt, so bewegt sich der Betätigungskörper 132, wie in Fig. 6 dargestellt, so weit in der Richtung 90b, daß die Sperrkörper 127 mit ihren Innenflächen 134 nicht mehr an den Betätigungsflächen 136 anliegen, sondern an den Freigabeflächen 138 und somit die Möglichkeit haben, sich in der Querrichtung 131 so weit vom Gehäuse 122 weg zu bewegen, daß sie nicht mehr in die Taschen 130 eingreifen. Dabei hat sich zunächst der Spannkörper 124 aufgrund der gegenüber der Stellfeder 150 stärkeren Spannfeder 126 noch nicht in Richtung 90b bewegt, sondern steht noch unter der Kraft der Spannfeder 126 und beaufschlagt den Verschiebekeil 92, um diesen in der die Kugel 60 spielfrei in Sperrstellung haltenden Stellung zu halten.

Erst nachdem der Betätigungskörper 132 so weit bewegt ist, daß die Bewegung durch die gegen den Anschlagstift 142 wirkende Anschlagfläche 148 begrenzt ist, erfolgt über den Betätigungskörper 132 eine Verschiebung des Spannkörpers 124 in der Richtung 90b entgegengesetzt zur Spannrichtung 90a und somit entgegengesetzt zur Kraftwirkung der Spannfeder 126, wie in Fig. 7 dargestellt, so daß sich auch die Sperrkörper 127 in Löserichtung 90b von den Taschen 130 weg bewegen und ein Verschieben des mit dem Spannkörper 124 verbundenen Keilkörpers 82 so weit möglich ist, daß die Verriegelungskugel 60 die Möglichkeit hat, über die Stellschräge 86 hinweg ihre Freigabestellung einzunehmen.

Sobald die Betätigung durch das Zugseil 152 nicht mehr erfolgt, bewegt sich zunächst der Spannkörper 124 wiederum in Spannrichtung 90a und gleichzeitig beaufschlagt der Betätigungskörper 132 wiederum die Sperrkörper 127 so, daß diese das Bestreben haben, dann, wenn sie in Richtung 90a wiederum deckungsgleich mit den Taschen 130 stehen, in diese eingreifen und eine weitere Bewegung des Spannkörpers 124 in Richtung 90b wiederum blockieren, wobei hierzu wiederum die Betätigungsflächen 136 auf die Sperrkörper 127 wirken.

Die Taschen 130 und die Sperrkörper 127 sind dabei so relativ zueinander angeordnet, daß bei in die Taschen 130 eingreifenden Sperrkörpern 127 der Spannkörper 124 sich maximal soweit entgegengesetzt zur Spannrichtung 90a bewegt, daß die Verriegelungskugel 60 stets in ihrer Sperrstellung verbleibt. Beispielsweise lassen die Taschen 130 und die in diese eingreifenden Sperrkörper 127 eine Bewegung des Keilkörpers 82 so weit zu, daß ein Auflagepunkt der Verriegelungskugel 60 sich auf der Spannschräge 92 bis zur Sicherungsfläche 88 bewegen kann, jedoch nicht weiter.

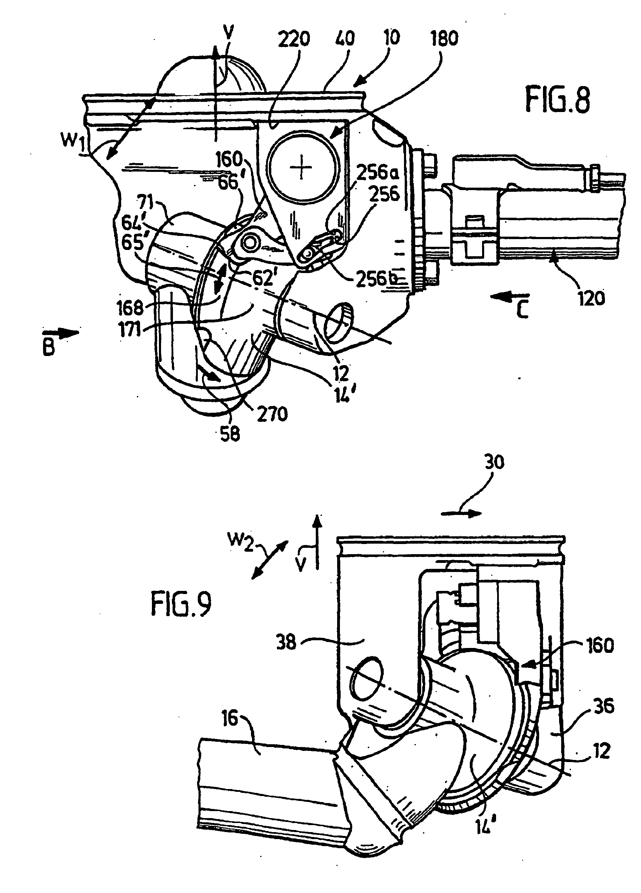

Bei einem zweiten nicht unter den Anspruch 1 Fallen dem Ausführungsbeispiel einer erfindungsgemäßen Anhängekupplung, ausschnittsweise dargestellt in den Fig. 8 und 9, sind diejenigen Teile, die mit denen des ersten Ausführungsbeispiels identisch sind, mit den identischen Bezugszeichen versehen.

Insbesondere ist das Lagerteil 10 im wesentlichen von seinen Grundfunktionen her identisch ausgebildet, wobei insbesondere auch die Schwenkachse 12 in gleicher Richtung verläuft wie beim ersten Ausführungsbeispiel. Fig. 8 zeigt dabei den Winkel W1, gegenüber welchem die Schwenkachse 12 bezüglich der Vertikalen V geneigt ist, sofern die Lage der Schwenkachse 12 in eine senkrecht zur Fahrzeuglängsrichtung 30 verlaufende Querebene des Fahrzeugs projiziert ist. Fig. 9 zeigt den Winkel W2, um welchen die Schwenkachse 12 gegenüber der Vertikalen V geneigt ist, wenn die Schwenkachse 12 in eine von der Fahrzeuglängsrichtung 30 und der Vertikalen V aufgespannte Fahrzeuglängsebene projiziert ist.

Ferner sind die Lagerflansche 36 und 38 sowie das Schwenkteil 14 und der Kugelhals 16, genau wie beim ersten Ausführungsbeispiel beschrieben, einstückig miteinander verbunden und stellen eine als Ganzes um die Schwenkachse 12 schwenkbare Einheit dar.

Allerdings weicht das Schwenkteil 14' hinsichtlich seiner Form von der Form des Schwenkteils 14 des ersten Ausführungsbeispiels ab, wie nachfolgend noch im einzelnen dargelegt ist.

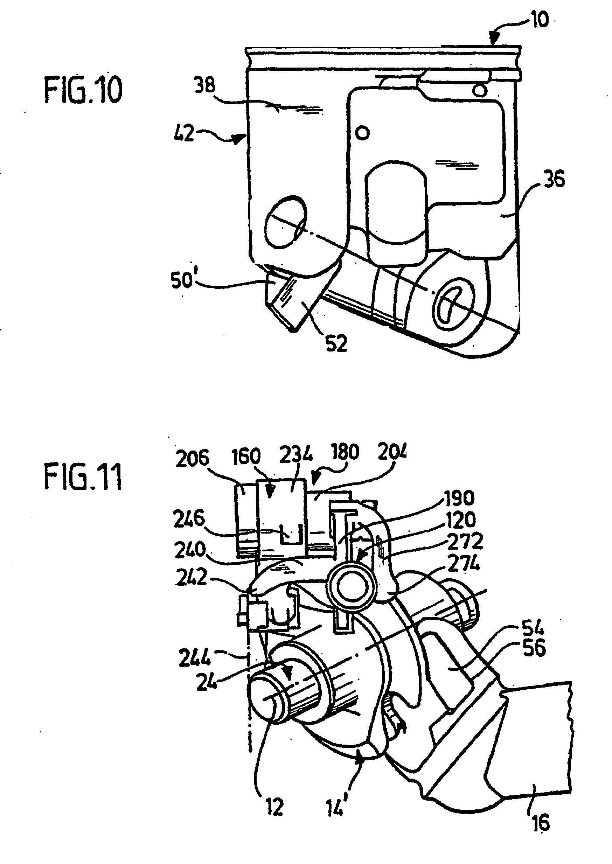

Bei der Darstellung des Lagerteils 10 in Fig. 10 unter Weglassung des Schwenkteils 14' mit dem Kugelhals 16 und des Lagerbolzens 24 ist die am Lagerteil 10, insbesondere der Rückwand 42 desselben, vorgesehene Stützfläche 52 erkennbar, die durch einen die Rückwand 42 angeformtes Stützelement 50' gebildet wird.

Gegen diese Stützfläche 54 wirkt, wie in Fig. 11 dargestellt, in der Arbeitsstellung die erste Anschlagfläche 54, welche von dem Ansatz 56 des Kugelhalses 16 getragen ist, der unmittelbar an den vom Schwenkteil 14' ausgehenden Ansatz des Kugelhalses 16 angeformt ist.

Als zweite Anschlagfläche 64' ist, wie in Fig. 8 dargestellt, eine quer zu einer Umlaufbahn 65' um die Schwenkachse 12 verlaufende Endfläche 64' einer als Ganzes mit 66' bezeichneten Vertiefung vorgesehen, welche in einem um die Schwenkachse 12 umlaufenden Kamm 168 angeordnet ist, der über einen den Lagerbolzen 24 umschließenden Lagerkörper 171 des Schwenkteils 14' radial übersteht.

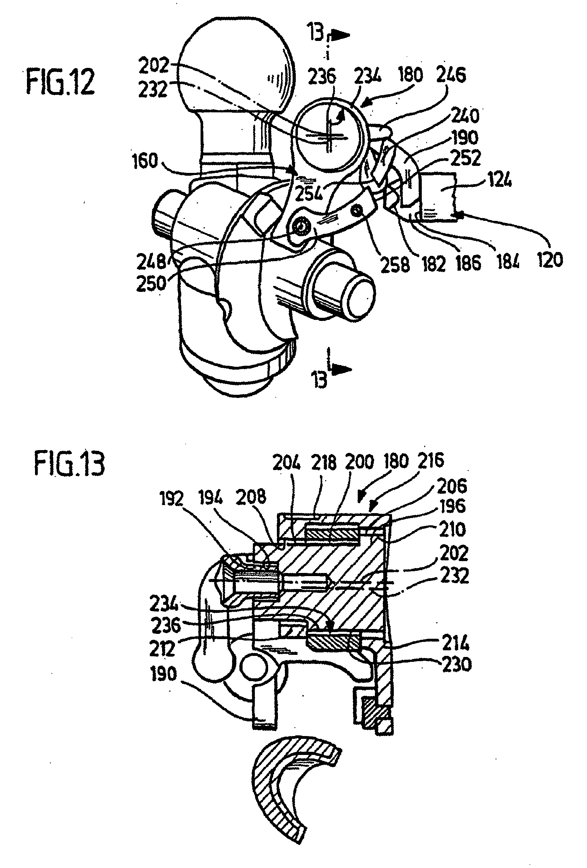

Die mit der zweiten Anschlagfläche 64 zusammenwirkende zweite Stützfläche 62' ist getragen von einem in Form eines Stützarms ausgebildeten zweiten Stützelement 160, welcher - wie nachfolgend im einzelnen erläutert - zwischen einer Sperrstellung, dargestellt in Fig. 8 und einer Freigabestellung, dargestellt in Fig. 12, bewegbar ist.

Zum Verschwenken des Stützarms 160 ist eine als Ganzes mit 180 bezeichnete Betätigungseinrichtung vorgesehen, welche mit der Spannkrafterzeugungseinheit 120 zusammenwirkt, um den Stützarm 160 in die Freigabestellung und die Sperrstellung zu verschwenken und mit diesem ein Verspannen des Schwenkteils 14' zu erreichen.

Die Spannkrafterzeugungseinheit 120 ist prinzipiell in gleicher Weise ausgebildet wie beim ersten Ausführungsbeispiel, mit dem einzigen Unterschied, daß an den Spannkörper 124 nicht wie beim ersten Ausführungsbeispiel der Keilkörper 82 angeformt ist, sondern eine mit zwei einander gegenüberliegenden Wirkflächen 182 und 184 versehene und zwischen diesen liegende Aussparung 186, welche mit diesen Wirkflächen 182 und 184 auf einen zwischen diese Wirkflächen 182 und 184 eingreifenden sichelförmigen Antriebshebel 190 der Betätigungseinrichtung 180 einwirken.

Der Antriebshebel 190 der Betätigungseinrichtung 180 ist mit einem beispielsweise eine mehrkantige Form aufweisenden Hebelansatz 192 versehen, welcher formschlüssig in eine Hebelaufnahme 194 einer Exzenterwelle 196 eingesetzt ist. (Fig. 3)

Die Exzenterwelle 196 umfaßt ihrerseits ferner zwei beiderseits eines Exzenterabschnitts 200 angeordnete und zu einer Drehachse 202 koaxial angeordnete Lagerflächen 204 und 206, welche entsprechend den Lagerflächen 204 und 206 geformte Aufnahmeflächen 208 und 210 um die Drehachse 202 drehbar in Lagerflanschen 212 und 214 eines als Ganzes mit 216 bezeichneten Lagerkörpers gelagert sind, wobei der Lagerkörper 216 eine die Lagerflansche 212 und 214 tragende Grundplatte 218 umfaßt, die ihrerseits, wie beispielsweise in Fig. 8 dargestellt, an einer Unterseite 220 der Montageplatte 40 montierbar ist.

Vorzugsweise ist eine Montage der Grundplatte 218 derart vorgesehen, daß durch die Positionierung der Grundplatte 218 und auch die Positionierung der gesamten Betätigungseinrichtung 180 und damit eine Justierung der Betätigungseinrichtung 180 mitsamt dem Stützarm 160 relativ zum Lagerteil 10 durchführbar ist.

Der Exzenterabschnitt 200 umfaßt ebenfalls eine Lagerfläche 230, welche zylindrisch zu einer gegenüber der Drehachse 202 exzentrisch versetzten Achse 232 ausgebildet ist.

Durch die Lagerfläche 230 ist der Stützarm 260 mit in einem Lagerauge 234 desselben angeordneten Lageraugenflächen 236 um die Achse 232 drehbar gelagert, wobei durch Verdrehen des Exzenterabschnitts 200 um die Drehachse 202 eine Verschiebung des Stützarms 160 in radialer Richtung zur Drehachse 202 möglich ist und die maximal mögliche Verschiebung des Stützarms 160 in radialer Richtung zur Drehachse 202 dem Abstand der Achse 232 von der Drehachse 202 entspricht.

Außerdem ist der Stützarm 160 aufgrund der zylindrischen Ausbildung der Lagerfläche 230 um die Achse 232 unabhängig von der Stellung des Exzenterabschnitts 200 verschwenkbar, wobei das Verschwenken des Stützarms 160 ebenfalls über den Antriebshebel 190 mit erfolgt, wie nachfolgend im einzelnen beschrieben.

Der Antriebshebel 190 ist hierzu, wie in Fig. 11 dargestellt, mit einem Mitnehmerarm 240 versehen, welcher sich quer zum Antriebshebel 190 in Richtung des Stützarms 160 erstreckt und dann noch über den Stützarm 160 hinaus so weit vom Antriebshebel 190 weg, daß ein vorderes Ende 242 des Mitnehmerarms bis in eine Ebene 244 reicht, die senkrecht zur Drehachse 202 auf einer dem Antriebshebel 190 abgewandten Seite des Stützarms 160 verläuft.

Ferner ist der Stützarm 160 im Bereich seines Lagerauges 234 mit einer Nase 246 versehen, welche in radialer Richtung zur Drehachse 202 übersteht und zwar so weit, daß der Mitnehmerarm 240 an dieser unter Mitnahme des Stützarms 160 zur Anlage kommen kann, wie in Fig. 12 dargestellt, und nachfolgend noch im einzelnen beschrieben.

An dem Stützarm 160 ist um eine im Abstand zur Achse 232 verlaufende Drehachse 248 drehbar ein Mitnahmehebel 250 angelenkt, welcher sich in der Ebene 244 erstreckt und eine Mitnahmefläche 252 aufweist, die in der Lage ist, mit einer Endfläche 254 am Ende 242 des Mitnehmerarms 240 zusammenzuwirken, wobei der Mitnahmehebel 250 zusätzlich noch durch eine an dem Lagerflansch 214 vorgesehene Kulissenbahn 256 steuerbar ist und zwar so, daß die Mitnahmefläche 252 in einer mit der Endfläche 254 in Wirkverbindung bringbaren Stellung steht oder einer außer Wirkverbindung stehenden Stellung. Hierzu ist der Mitnahmehebel 250 noch mit einem Mitnehmer 258, vorzugsweise in Form eines Mitnehmerstifts versehen, welcher in die Kulissenbahn 256 eingreift. Der Mitnehmer 258 ist dabei nahe der Mitnahmefläche 252 vorgesehen, um durch Verschwenken des Mitnahmehebels 250 um die Schwenkachse 248 die Position der Mitnahmefläche 252 in der bereits genannten Weise zu steuern.

Wie bereits in Fig. 8 und 9 dargestellt, liegt in der Sperrstellung des Stützarms 160 dieser mit seiner Stützfläche 162 an der Anschlagfläche 164 der Vertiefung 166 an. Außerdem steht der Stützarm 160 in der in Fig. 8 und 9 gezeichneten Stellung in seiner Spannstellung, so daß das Schwenkteil 14' ein derartiges Moment erfährt, daß die Stützfläche 52 und die erste Anschlagfläche 54 gegeneinander verspannt anliegen.

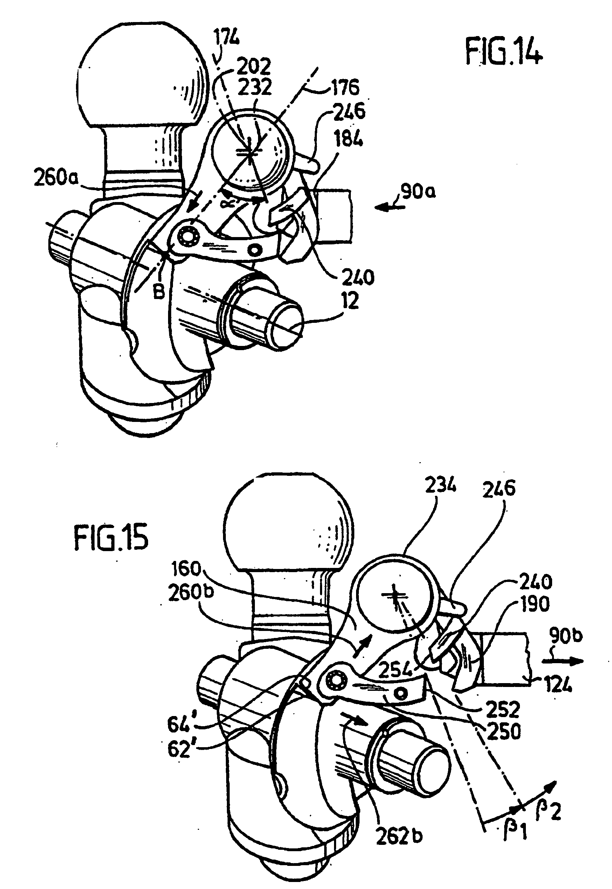

In dieser Stellung ist, wie in Fig. 14 dargestellt, der Exzenterabschnitt 200 so weit verdreht, daß die Achse 232 auf einer der Anschlagfläche 64' zugewandten Seite der Drehachse der Exzenterwelle 196 liegt, so daß der gesamte Stützarm 160 in Richtung der Anschlagfläche 64' verschoben ist.

Dabei schließt, wie in Fig. 14 dargestellt, eine durch die Achse 232 und die Drehachse 202 hindurchverlaufende Ebene 174 einen Winkel α mit einer Ebene 176 ein, die einerseits durch die Achse 232 und andererseits durch einen Berührungspunkt B zwischen der Anschlagfläche 64' und der Stützfläche 62' verläuft.

Das heißt, daß die Verschiebung des Stützarms 160 in Richtung der Anschlagfläche 64' nicht um den maximal möglichen Weg, vorgegeben durch den Abstand zwischen der Drehachse 202 und der Achse 232, erfolgt ist, sondern nur um einen Teilbetrag dieses Weges, wie nachfolgend noch im einzelnen erläutert.

In dieser Stellung des Stützarms 160 wird die Exzenterwelle 196 durch den Antriebshebel 190 mit einem Drehmoment beaufschlagt, welches daher rührt, daß auf den Antriebshebel 190 der von der Spannfeder 126 der Spannkrafterzeugungseinheit 120 beaufschlagte Spannkörper 124 dadurch wirkt, daß die Wirkfläche 184 den Antriebshebel 190 beaufschlagt.

Der Stützarm 160 würde aber ohnehin in der Stützfläche 62' die Anschlagfläche 64' beaufschlagenden Stellung verbleiben, da der Exzenterabschnitt 200 so ausgebildet ist, daß aufgrund der Reibung zwischen der Lagerfläche 230 und der Lageraugenfläche 236 sowie des Abstandes zwischen der Drehachse 202 und der Achse 232 eine Selbsthemmung des Exzenters gegen eine Verdrehung durch Einwirkung auf die Stützfläche 62' besteht.

Wird nun an dem Zugseil 152 der Spannkrafterzeugungseinheit 120 gezogen und der Spannkörper 124 in Löserichtung 90b bewegt, so erfolgt, wie in Fig. 15 dargestellt, eine Drehung des Antriebshebels 190 so weit, bis der Mitnehmerarm 240 an der Nase 246 zur Anlage kommt. Während dieser Verdrehung des Antriebshebels 190 erfolgt lediglich eine Verdrehung des Exzenterabschnitts 200 gegenüber der Ebene 174 um einen Winkel β₁, wodurch eine Bewegung des Stützarms 160 in einer Richtung 260b von der Anschlagfläche 64' weg von der Spannstellung in die Lösestellung erfolgt, so daß die Verspannung zwischen der Stützfläche 52 und der Anlagefläche 54 aufgehoben wird. Wird der Spannkörper 124 noch weiter in Richtung 90b bewegt, so erfolgt ein weiteres Verschwenken des Exzenterabschnitts 200 um einen weiteren zusätzlichen Winkel β₂, so daß der Stützarm 160 noch weiter in Richtung 260b bewegt wird. Gleichzeitig erfolgt aber durch Anlage des Mitnehmerarms 240 an der Nase 246 ein gleichzeitiges Verschwenken des Stützarms 160 in einer Richtung 262b von der Sperrstellung in die Freigabestellung, wobei die Stützfläche 62' aus der Vertiefung 66' herausbewegt wird und sich somit auch von der Anschlagfläche 64' entfernt und somit eine Schwenkbewegung des Kugelhalses 16 um die Schwenkachse 12 freigibt. Bereits bei geringer Verschwenkung des Schwenkteils 14' mit dem Kugelhals 16 um die Schwenkachse 12 ist das Schwenkteil 14' mit dem Kamm 168 so weit gegenüber dem Stützarm 160 verdreht, daß die Stützfläche 62' nicht mehr in die Vertiefung 66' hineinbewegt werden kann. Ist dies der Fall, kann bereits die Zugbeaufschlagung des Spannkörpers 124 durch das Zugseil 152 entfallen und der Spannkörper 124, beaufschlagt durch die Spannfeder 126, wieder auf den Antriebshebel 190 wirken.

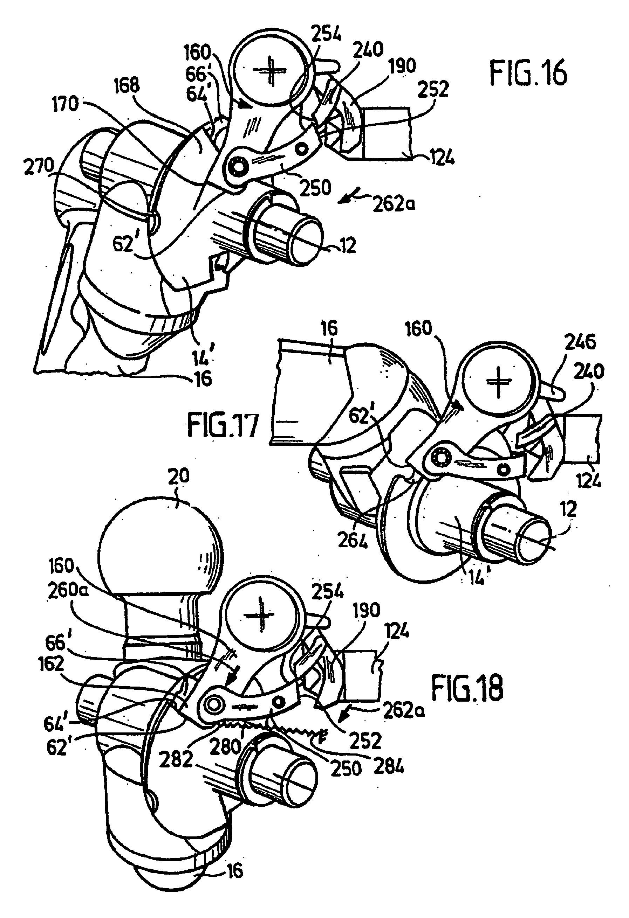

Der Antriebshebel 190 ist jedoch in seiner Schwenkbewegung in Richtung 262a dadurch blockiert, daß der Mitnehmerarm 240 mit der Endfläche 254 an der Mitnahmefläche 252 des Mitnahmehebels 250 anliegt (Fig. 16), welcher durch die Kulissenbahn 256 so weit verschwenkt ist, daß die Mitnahmefläche 252 durch die Endfläche 254 beaufschlagbar ist. Hierzu weist die Kulissenbahn 256, wie in Fig. 8 dargestellt, einen den Mitnahmehebel 250 in Richtung der Drehachse 202 verschwenkenden und somit in Wirkstellung bringenden, beispielsweise anhebenden Abschnitt 256a auf.

Ferner ist der Stützarm 160 gegen ein Verschwenken in Richtung 262a, das heißt in Richtung der Sperrstellung, blockiert, da der Stützarm an einer Seitenfläche 170 des Kamms 168 anliegt und an dieser beim Drehen des Schwenkteils entlanggleitet. Dabei ist der Kugelhals 16 beispielsweise von der Arbeitsstellung in eine Ruhestellung verschwenkbar.

In der in Fig. 17 dargestellten Ruhestellung des Kugelhalses 16 ist das Schwenkteil 14' so weit um die Achse 12 verschwenkt, daß der Stützarm 160 mit seinem vorderen, die Stützfläche 62' tragenden Ende in eine Freisparung 264 einschwenken kann, in welcher allerdings die Stützfläche 62' nicht wirksam ist. Um das Schwenkteil 141 in der Ruhestellung des Kugelhalses 16 zu fixieren ist der Kamm 168 mit einer weiteren Aussparung 270 versehen, in welche in der Ruhestellung des Kugelhalses 16 ein Festleghebel 272 mit einem kugelförmig ausgebildeten vorderen Ende 274 in Eingriff kommt. Der Festleghebel 272 ist dabei starr mit dem Antriebshebel 190 verbunden und kann dann in die Aussparung 270 eingreifen, wenn der Stützarm 160 in die Freisparung 264 eingeschwenkt ist.

Das Einschwenken des die Stützfläche 62' tragenden Endes des Stützarms 160 in die Freisparung 264 dient lediglich dazu, eine Verschwenkung des Antriebshebels 190 in Richtung 262a um einen derartigen Winkel zuzulassen, daß der Festleghebel 272 mit dem kugelförmigen Ende 274 in die Aussparung 270 eingreifen kann.

In der Ruhestellung des Kugelhalses 16 erfolgt somit lediglich eine Festlegung desselben gegen ein Verschwenken um die Schwenkachse 12 aufgrund des Eingreifens des Festleghebels 272 mit dem Ende 274 in die Aussparung 270, ohne daß ein zusätzliches Verspannen gegen zusätzliche Stütz- und Anlageflächen vorgesehen ist.

Das Freigeben der Schwenkbewegung des Schwenkteils 14' in der Ruhestellung des Kugelhalses 16 erfolgt wiederum durch Ziehen am Zugseil 152 und somit Bewegen des Spannkörpers 124 in Richtung 92b, so daß wiederum durch Zusammenwirken des Mitnehmerarms 240 mit der Nase 246 ein Verschwenken des Stützarms 160 und auch des Festleghebels 272 in die Freigabestellung erfolgt, und ein Weiterverschwenken des Schwenkteils 14 aus der Ruhestellung heraus wiederum zur Folge hat, daß der Stützarm 160 wiederum an der Seitenfläche 170 des Kamms 168 anliegt und somit ein gebremstes Verschwenken des Schwenkteils 14' um die Schwenkachse 12 in Richtung der Arbeitsstellung zuläßt, so daß die gleiche, in Fig. 16 bereits gezeichnete Stellung des Schwenkarms 160 erreichbar ist, wobei stets der Spannkörper 124 beaufschlagt durch die Kraft der Spannfeder 126 auf den Antriebshebel 190 wirkt und über den Mitnehmerarm 240, die Endfläche 254, die Mitnahmefläche 252 und den Mitnahmehebel 250 die Spannkraft der Spannfeder 126 in eine in Richtung 262a auf das die Stützfläche 62' tragende Ende des Stützarms 160 wirkende Kraft umsetzt, mit welcher diese gegen die Seitenfläche 170 wirkt.

Sobald der Kugelhals 16 die Arbeitsstellung erreicht hat, wie in Fig. 18 dargestellt, schwenkt der Stützarm 160 mit dem die Stützfläche 62' tragenden Ende in die Vertiefung 66' ein und geht somit von der Freigabestellung in die Sperrstellung über, so daß die Stützfläche 62' wiederum in teilweise Überdeckung mit der Anlagefläche 64' kommt. Sobald der Stützarm 160 wiederum voll in die Vertiefung 66 eingeschwenkt ist und die Stützfläche 62' der Anlagefläche 64' zugewandt ist, wird durch die Kulissenbahn 256 der Mitnahmehebel 250 durch einen außer Wirkstellung bringenden, beispielsweise absenkenden Abschnitt 256b der Kulissenbahn 256 so weit verschwenkt, daß die Endfläche 254 von der Mitnahmefläche 252 des Mitnahmehebels 250 abgleitet und nunmehr der Antriebshebel 190 in Richtung 262a weiter verschwenkbar ist, ohne den Stützarm 160, der bereits in der Vertiefung 66' steht, weiter zu verschwenken. Allerdings erfolgt dabei ein Verdrehen des Exzenterabschnitts 200 dergestalt, daß ein Verschieben des Stützarms 160 in Richtung 260a von der Lösestellung in die Spannstellung erfolgt, so daß die Stützfläche 62' die Anschlagfläche 64' mit Druck beaufschlagt und dabei zusätzlich ein Anlegen der Anschlagfläche 54 an der Stützfläche 52 mit Vorspannung und auch spielfrei erfolgt.

Zur Unterstützung des Erreichens der Sperrstellung ist, wie in Fig. 18 dargestellt, das die Stützflächen 62' tragende Ende 162 des Stützarms 160 mit einer Druckfeder 280 beaufschlagt, welche mit einem Ende 282 auf das Ende 162 des Stützarms 160 wird und sich mit einem anderen Ende 284 am Lagerteil 10, vorzugsweise am Lagerflansch 36, abstützt. Mit dieser Druckfeder 280 wird selbst bei nicht mehr auf die Mitnahmefläche 252 wirkender Endfläche 254 das Verschwenken des Stützarms in die Sperrstellung vollendet und die Sperrstellung aufrecht erhalten, bis ein Übergang von der Lösestellung in die Spannstellung vollzogen ist.

Ferner wird auch beim Betätigen der Spannkrafterzeugungseinheit 120 die Sperrstellung durch die Druckfeder 280 so lange aufrecht erhalten, bis eine Mitnahme des Stützarms 160 durch das Zusammenwirken der Nase 246 und des Mitnehmerarms 240 erfolgt.

## Patentansprüche

1. Anhängekupplung für Kraftfahrzeuge umfassend ein fahrzeugfest angeordnetes Lagerteil (10) und ein am Lagerteil (10) gelagertes Schwenkteil (14) mit einem Kugelhals (16) und mit einer Kupplungskugel (20), welches gegenüber dem Lagerteil (10) um eine Schwenkachse (12) verschwenkbar ist, so dass der Kugelhals (16) durch eine Schwenkbewegung zwischen einer Ruhestellung und einer Arbeitsstellung verschwenkbar ist, wobei zum Fixieren des Kugelhalses (16) in der Arbeitsstellung ein Verspannen von Anschlagelementen (56, 66) des Schwenkteils (14) und von Stützelementen (50, 60) des Lagerteils (10) miteinander durch ein Verspanngetriebe (94, 60) vorgesehen ist, mit welchem mindestens eines der Stützelemente (60) von einer Lösestellung in eine Spannstellung und umgekehrt bewegbar ist und in der Spannstellung eine das Verspannen bewirkende Spannkraft erzeugbar ist, wobei beim Schwenken des Schwenkteils (14) um die Achse (12) jedes der Anschlagelemente (56, 66) des Schwenkteils (14) auf einer radial beabstandeten Bahn (65) um die Schwenkachse (12) umläuft, wobei eines der Stützelemente (50, 60) als von einer Freigabestellung in die Bahn (65) des entsprechenden Anschlagelements (66) hinein bis zu einer Sperrstellung und umgekehrt bewegbares Stützelement (60) am Lagerteil (10) angeordnet ist, wobei eine Betätigungseinrichtung (80) vorgesehen ist, welche das Verspanngetriebe (94, 60) umfasst, wobei die Betätigungseinrichtung (80) zum Fixieren des Kugelhalses (16) in der Arbeitsstellung das Stützelement (60) von der Freigabestellung in die Sperrstellung bewegt und nach Erreichen der Sperrstellung das Verspanngetriebe (94, 60) das Stützelement (60) von der in der Sperrstellung vorliegenden Lösestellung in die Spannstellung überführt, wobei die Betätigungseinrichtung (80) ein einziges Antriebselement (82) aufweist bei dessen Betätigung das bewegbare Stützelement (60) in jede der die Freigabestellung, die Sperrstellung, die Lösestellung und die Spannstellung umfassenden Stellungen bringbar ist,
**dadurch gekennzeichnet , dass** das Verspanngetriebe als Keilgetriebe (94, 60) ausgebildet ist, dass in der Spannstellung das Stützelement (60) eines Paares (60, 66) aus jeweils einem der Stützelemente (50, 60) und Anschlagelemente (56, 66) in Spannkraftrichtung (58) nachstellend auf das Anschlagelement (66) wirkt und dass die Betätigungseinrichtung (80) zwei nacheinander in eine auf das Stützelement (60) wirkende Stellung bringbare Keilelemente (84, 94) aufweist, wobei eines (84) der Keilelemente (84, 94) zum Überführen des Stützelements (60) von der Freigabestellung in die Sperrstellung und das andere (94) der Keilelemente (84, 94) zum Überführen des Stützelements (60) von der Lösestellung in die Spannstellung dient.

2. Anhängekupplung nach Anspruch 1, **dadurch gekennzeichnet, dass** das Verspanngetriebe (94, 60) selbsthemmend ausgebildet ist.

3. Anhängekupplung nach Anspruch 1 oder 2, **dadurch gekennzeichnet, dass** das Verspanngetriebe als Verschiebekeilgetriebe (94, 60) ausgebildet ist.

4. Anhängekupplung nach einem der voranstehenden Ansprüche, **dadurch gekennzeichnet, dass** die Betätigungseinrichtung (80) zum Freigeben des Kugelhalses (16) das Verspanngetriebe (94, 60) von der Spannstellung in die Lösestellung überführt und dann das bewegbare Stützelement (60) von der Sperrstellung in die Freigabestellung bewegt.

5. Anhängekupplung nach einem der voranstehenden Ansprüche, **dadurch gekennzeichnet, dass** die Betätigungseinrichtung (80) das bewegbare Stützelement (60) zwangsgesteuert von der Freigabestellung in die Sperrstellung bewegt.

6. Anhängekupplung nach einem der voranstehenden Ansprüche, **dadurch gekennzeichnet, dass** die Betätigungseinrichtung (80) das bewegbare Stützelement (60) zwangsgesteuert von der Lösestellung in die Spannstellung bewegt.

7. Anhängekupplung nach einem der voranstehenden Ansprüche, **dadurch gekennzeichnet, dass** die Betätigungseinrichtung (80) mit einer Spannkrafterzeugungseinheit (120) zusammenwirkt, welche die Betätigungseinrichtung (80) im Sinne einer Betätigung in Richtung der Sperrstellung und der Spannstellung des Verspanngetriebes (94, 60) mit einer Kraft beaufschlagt.

8. Anhängekupplung nach Anspruch 7, **dadurch gekennzeichnet, dass** die Spannkrafterzeugungseinheit (120) einen Kraftspeicher (126) aufweist, welcher einen Spannkörper (124) im Sinne einer Betätigung der Betätigungseinrichtung (80) zum Erreichen der Sperrstellung und der Spannstellung beaufschlagt.

9. Anhängekupplung nach Anspruch 7 oder 8, **dadurch gekennzeichnet, dass** die Spannkrafterzeugungseinheit (120) eine Blockiereinrichtung (127, 130) aufweist, welche bei einer Nichtbetätigung der Spannkrafterzeugungseinheit (120) eine Bewegung des Spannkörpers (124) aus der Sperrstellung heraus in Richtung der Freigabestellung aufweist.

10. Anhängekupplung nach Anspruch 9, **dadurch gekennzeichnet, dass** die Blockiereinrichtung (127, 130) bei Betätigung der Spannkrafterzeugungseinheit (120) zum Erreichen der Freigabestellung lösbar ist.

11. Anhängekupplung nach Anspruch 9 oder 10, **dadurch gekennzeichnet, dass** die Spannkrafterzeugungseinheit (120) ein Bedienelement (152) aufweist, mit welchem zuerst die Blockiereinrichtung (127) lösbar und dann mit einer Entriegelungskraft auf die Betätigungseinrichtung (80) einwirkbar ist.

12. Anhängekupplung nach einem der voranstehenden Ansprüche, **dadurch gekennzeichnet, dass** das Schwenkteil (14) zwei im Abstand voneinander angeordnete Anschlagelemente (56, 66) aufweist, dass das Lagerteil (10) mit zwei Stützelementen (50, 60) versehen ist und dass zum Fixieren des Kugelhalses (16) in der Arbeitsstellung eines der Stützelemente (60) und eines der Anschlagelemente (66) im Sinne einer Schwenkbewegung des Kugelhalses (16) in einer ersten Richtung (58) zusammenwirken, welcher das andere (50) der Stützelemente und das andere der Anschlagelemente (56) entgegenwirken und dass hierbei die Anschlagelemente (56, 66) und die Stützelemente (50, 60) spielfrei gegeneinander anlegbar sind.

13. Anhängekupplung nach einem der voranstehenden Ansprüche, **dadurch gekennzeichnet, dass** zum Fixieren des Kugelhalses (16) in der Arbeitsstellung die Anschlagelemente (56, 66) und die Stützelemente (50, 60) in einer Spannstellung gegeneinander verspannbar sind.

14. Anhängekupplung nach einem der voranstehenden Ansprüche, **dadurch gekennzeichnet, dass** in der Spannstellung auf eines (60) der Elemente (60, 66) ein elastischer Spannkraftspeicher (126) wirkt.

15. Anhängekupplung nach einem der voranstehenden Ansprüche, **dadurch gekennzeichnet, dass** die Anschlagelemente (56, 66) auf unterschiedlichen Bahnen (55, 65) um die Schwenkachse (12) umlaufend bewegbar sind.

16. Anhängekupplung nach einem der voranstehenden Ansprüche, **dadurch gekennzeichnet, dass** ein erstes der Anschlagelemente (56) als fest am Schwenkteil (14) angeordnetes Element ausgebildet ist.

17. Anhängekupplung nach Anspruch 16, **dadurch gekennzeichnet, dass** ein zweites der Anschlagelemente (66) als fest am Schwenkteil (14) angeordnetes Element ausgebildet ist.

18. Anhängekupplung nach einem der voranstehenden Ansprüche, **dadurch gekennzeichnet, dass** eines (66) der Anschlagelemente (56, 66) an einem Kamm (68) des Schwenkteils (14) angeordnet ist.

19. Anhängekupplung nach einem der voranstehenden Ansprüche, **dadurch gekennzeichnet, dass** ein anderes (56) der Anschlagelemente (56, 66) an einem sich an das Schwenkteil (14) anschließenden Ansatz des Kugelhalses (16) angeordnet ist.

20. Anhängekupplung nach einem der voranstehenden Ansprüche, **dadurch gekennzeichnet, dass** ein erstes (50) der Stützelemente (50, 60) in einem in Fahrtrichtung gesehenen rückwärtigen Bereich (42) des Lagerteils (10) angeordnet ist.

21. Anhängekupplung nach einem der voranstehenden Ansprüche, **dadurch gekennzeichnet, dass** das bewegbare Stützelement (60) durch eine Linearverschiebung in die Bahn (65) des entsprechenden Anschlagelements (66) hineinbewegbar ist.

22. Anhängekupplung nach einem der voranstehenden Ansprüche, **dadurch gekennzeichnet, dass** zum Bewegen des Stützelements (60) zwischen der Freigabestellung und der Sperrstellung die Betätigungseinrichtung (80) vorgesehen ist und dass die Betätigungseinrichtung (80) einen auf das in einer Führung (74) geführte Stützelement (60) wirkenden Stellkeil (84) umfasst.

## Claims

1. A trailer coupling for motor vehicles, comprising a bearing part (10) arranged fixed to the vehicle and a pivotal part (14) mounted on the bearing part (10) and having a ball neck (16) and a coupling ball (20), the pivotal part being pivotal, in relation to the bearing part (10), about a pivot axis (12) such that the ball neck (16) is pivotal by a pivotal movement between a rest position and an operative position, wherein, to fix the ball neck (16) in the operative position, a tensioning gear (94, 60) is provided to tension abutting elements (56, 66) of the pivotal part (14) and supporting elements (50, 60) of the bearing part (10) against one another, by means of which tensioning gear at least one of the supporting elements (60) is movable out of a free position into a clamping position and vice versa and a clamping force bringing about the tensioning can be generated in the clamping position, wherein when the pivotal part (14) is pivoted about the axis (12) each of the abutting elements (56, 66) of the pivotal part (14) rotates about the pivot axis (12) on a radially spaced path (65), wherein one of the supporting elements (50, 60) is arranged on the bearing part (10) as a supporting element (60) which is movable from a release position into the path (65) of the corresponding abutting element (66) as far as a locking position and vice versa, wherein an actuating means (80) is provided which includes the tensioning gear (94, 60), wherein in order to fix the ball neck (16) in the operative position the actuating means (80) moves the supporting element (60) from the release position into the locking position and after the locking position has been reached the tensioning gear (94, 60) transfers the supporting element (60) from the free position prevailing in the locking position into the clamping position, wherein the actuating means (80) has a single drive element (82) on actuation of which the movable supporting element (60) can be brought into any of the positions comprising the release position, the locking position, the free position and the clamping position, **characterised in that** the tensioning gear is constructed as a wedge gear (94, 60), **in that**, in the clamping position, the supporting element (60) of a pair (60, 66) comprising one of the supporting elements (50, 60) and one of the abutting elements (56, 66) acts on the abutting element (66) in the direction in which the clamping force acts (58), in such a way as to provide a re-adjustment, and **in that** the actuating means (80) has two wedge elements (84, 94) which may be brought successively into a position acting on the supporting element (60), wherein one (84) of the wedge elements (84, 94) serves to transfer the supporting element (60) from the release position into the locking position and the other (94) of the wedge elements (84, 94) serves to transfer the supporting element (60) from the free position into the clamping position.

2. A trailer coupling according to Claim 1, **characterised in that** the tensioning gear (94, 60) is constructed to be automatically locking.

3. A trailer coupling according to Claim 1 or 2, **characterised in that** the tensioning gear is constructed as a displacement wedge gear (94, 60).

4. A trailer coupling according to one of the preceding claims, **characterised in that**, in order to release the ball neck (16), the actuating means (80) transfers the tensioning gear (94, 60) from the clamping position into the free position and then moves the movable supporting element (60) from the locking position into the release position.

5. A trailer coupling according to one of the preceding claims, **characterised in that** the actuating means (80) forcibly moves the movable supporting element (60) from the release position into the locking position.

6. A trailer coupling according to one of the preceding claims, **characterised in that** the actuating means (80) forcibly moves the movable supporting element (60) from the free position into the clamping position.

7. A trailer coupling according to one of the preceding claims, **characterised in that** the actuating means (80) co-operates with a clamping force generating unit (120) which acts on the actuating means (80) with a force in such a manner that it is actuated in the direction of the locking position and the clamping position of the tensioning gear (94, 60).

8. A trailer coupling according to Claim 7, **characterised in that** the clamping force generating unit (120) has a force energy store (126) which acts on a clamping body (124) in such a manner that the actuating means (80) is actuated to reach the locking position and the clamping position.

9. A trailer coupling according to Claim 7 or 8, **characterised in that** the clamping force generating unit (120) has a blocking device (127, 130) which, when the clamping force generating unit (120) is not actuated, has a movement of the clamping body (124) out of the locking position in the direction of the release position.

10. A trailer coupling according to Claim 9, **characterised in that** the blocking device (127, 130) can be freed when the clamping force generating unit (120) is actuated in order to reach the release position.

11. A trailer coupling according to Claim 9 or 10, **characterised in that** the clamping force generating unit (120) has an operating element (152) by means of which first the blocking device (127) can be freed and then it becomes possible to act on the actuating means (80) using an unlatching force.

12. A trailer coupling according to one of the preceding claims, **characterised in that** the pivotal part (14) has two abutting elements (56, 66) arranged spaced from one another, **in that** the bearing part (10) is provided with two supporting elements (50, 60) and **in that**, to fix the ball neck (16) in the operative position, one of the supporting elements (60) and one of the abutting elements (66) co-operate such that the ball neck (16) undergoes a pivotal movement in a first direction (58) which is countered by the other (50) of the supporting elements and the other of the abutting elements (56), and **in that** in so doing the abutting elements (56, 66) and the supporting elements (50, 60) are able to abut against one another without play.

13. A trailer coupling according to one of the preceding claims, **characterised in that**, to fix the ball neck (16) in the operative position, the abutting elements (56, 66) and the supporting elements (50, 60) can be tensioned against one another in a clamping position.

14. A trailer coupling according to one of the preceding claims, **characterised in that** in the clamping position a resilient clamping force energy store (126) acts on one (60) of the elements (60, 66).

15. A trailer coupling according to one of the preceding claims, **characterised in that** the abutting elements (56, 66) are movable such that they rotate about the pivot axis (12) on different paths (55, 65).

16. A trailer coupling according to one of the preceding claims, **characterised in that** a first one of the abutting elements (56) is constructed as an element arranged fixed to the pivotal part (14).

17. A trailer coupling according to Claim 16, **characterised in that** a second of the abutting elements (66) is constructed as an element arranged fixed to the pivotal part (14).

18. A trailer coupling according to one of the preceding claims, **characterised in that** one (66) of the abutting elements (56, 66) is arranged on a comb (68) of the pivotal part (14).

19. A trailer coupling according to one of the preceding claims, **characterised in that** another (56) of the abutting elements (56, 66) is arranged on a lug of the ball neck (16), this lug adjoining the pivotal part (14).

20. A trailer coupling according to one of the preceding claims, **characterised in that** a first one (50) of the supporting elements (50, 60) is arranged in a region (42) of the bearing part (10) which is at the rear, as seen in the direction of travel.

21. A trailer coupling according to one of the preceding claims, **characterised in that** the movable supporting element (60) is movable into the path (65) of the corresponding abutting element (66) as a result of a linear displacement.

22. A trailer coupling according to one of the preceding claims, **characterised in that** the actuating means (80) is provided to move the supporting element (60) between the release position and the locking position, and **in that** the actuating means (80) comprises an adjusting wedge (84) acting on the supporting element (60) guided in a guide (74).

## Revendications

1. Attelage de remorque pour véhicules motorisés comportant une partie portante (10) disposée solidaire du véhicule et une partie pivotante (14), portée sur la partie portante (10) et comportant un col de rotule (16) et une rotule d'attelage (20) qui, par rapport à la partie portante (10), peut pivoter autour d'un axe de pivotement (12) de sorte que le col de rotule (16) peut pivoter par un mouvement de pivotement entre une position de repos et une position de travail, un serrage des éléments de butée (56, 66) de la partie pivotante (14) et des éléments supports (50, 60) de la partie portante (10) étant prévu, pour fixer le col de rotule (16) dans la position de travail, au moyen d'un mécanisme de serrage (94, 60), avec lequel au moins un des éléments supports (60) est déplaçable d'une position de non-serrage à une position de serrage et vice-versa et qu'il est possible de produire une force de serrage opérant le serrage dans la position de serrage, chacun des éléments de butée (56, 66) de la partie pivotante (14) tournant, lors du pivotement de la partie pivotante (14) autour de l'axe (12), autour de l'axe de pivotement (12) sur un chemin (65) situé à une certaine distance radiale,
l'un des éléments supports (50, 60) étant disposé sur la partie portante (10) sous forme d'un élément support (60) se déplaçant d'une position de libération dans le chemin (65) de l'élément de butée (66) correspondant à une position de verrouillage et inverse, un dispositif de manoeuvre (80) étant prévu, lequel comporte le mécanisme de serrage (94, 60), le dispositif de manoeuvre (80) faisant passer, pour fixer le col de rotule (16) dans la position de travail, l'élément support (60) de la position de libération à la position de verrouillage et une fois atteinte la position de verrouillage, le mécanisme de serrage (94, 60) faisant passer l'élément support (60) de la position de non-serrage présente dans la position de verrouillage à la position de serrage, le dispositif de manoeuvre (80) présentant un unique élément d'entraînement (82), dont la manoeuvre peut amener l'élément support mobile (60) dans chacune des positions comprenant la position de libération, la position de verrouillage, la position de non-serrage et la position de serrage,
**caractérisé par le fait que** le mécanisme de serrage est conçu sous forme de mécanisme à clavette (94, 60), que dans la position de serrage l'élément support (60) d'une paire (60, 66) constituée de, respectivement, l'un des éléments supports (50, 60) et d'un des éléments de butée (56, 66) agit en réajustement sur l'élément de butée (66) dans la direction de la force de serrage (58), et que le dispositif de manoeuvre (80) présente deux éléments à clavette (84, 94) pouvant être amenés l'un après l'autre dans une position agissant sur l'élément support (60), un (84) des éléments à clavette (84, 94) servant à faire passer l'élément support (60) de la position de libération dans la position de verrouillage et l'autre (94) des éléments à clavette (84, 94) servant à faire passer l'élément support (60) de la position de non-serrage dans la position de serrage.

2. Attelage de remorque selon la revendication 1, **caractérisé par le fait que** le mécanisme de serrage (94, 60) est conçu auto-bloquant.

3. Attelage de remorque selon la revendication 1 ou 2, **caractérisé par le fait que** le mécanisme de serrage est conçu sous forme de mécanisme à clavette (94, 60).

4. Attelage de remorque selon l'une quelconque des revendications précédentes, **caractérisé par le fait que** pour libérer le col de rotule (16), le dispositif de manoeuvre (80) fait passer le mécanisme de serrage (94, 60) de 1 position de serrage à la position de non-serrage et déplace alors l'élément support mobile (60) de la position de verrouillage dans la position de libération.

5. Attelage de remorque selon l'une quelconque des revendications précédentes, **caractérisé par le fait que** le dispositif de manoeuvre (80) fait obligatoirement passer l'élément support mobile (60) de la position de libération à la position de verrouillage.

6. Attelage de remorque selon l'une quelconque des revendications précédentes, **caractérisé par le fait que** le dispositif de manoeuvre (80) fait obligatoirement passer l'élément support mobile (60) de la position de non-serrage à la position de serrage.

7. Attelage de remorque selon l'une quelconque des revendications précédentes, **caractérisé par le fait que** le dispositif de manoeuvre (80) collabore avec un organe de production d'une force de serrage (120) qui contraint avec une certaine force le dispositif de manoeuvre (80) au sens d'une manoeuvre en direction de la position de verrouillage et de la position de serrage du mécanisme de serrage (94, 60).

8. Attelage de remorque selon la revendication 7, **caractérisé par le fait que** l'organe de production d'une force de serrage (120) présente un accumulateur de force (126) qui contraint une pièce de serrage (124) dans le sens d'une manoeuvre du dispositif de manoeuvre (80) pour atteindre la position de verrouillage et la position de serrage.

9. Attelage de remorque selon la revendication 7 ou 8, **caractérisé par le fait que** l'organe de production d'une force de serrage (120) présente un dispositif de blocage (127, 130) qui, si l'on ne manoeuvre pas l'organe de production d'une force de serrage (120), bloque un mouvement de la pièce de serrage (124), depuis la position de verrouillage, en direction de la position de libération.

10. Attelage de remorque selon la revendication 9, **caractérisé par le fait que** si l'on manoeuvre l'organe de production d'une force de serrage (120), le dispositif de blocage (127, 130) peut se débloquer pour permettre d'atteindre la position de libération.

11. Attelage de remorque selon la revendication 9 ou 10, **caractérisé par le fait que** l'organe de production d'une force de serrage (120) présente un élément de service (152) avec lequel on peut tout d'abord débloquer le dispositif de blocage (127) puis agir sur le dispositif de manoeuvre (80) avec une force de déverrouillage.

12. Attelage de remorque selon l'une des revendications précédentes, **caractérisé par le fait que** la partie pivotante (14) présente deux éléments de butée (56, 66) placés à distance l'un de l'autre, que la partie portante (10) comporte deux éléments supports (50, 60) et que pour fixer le col de rotule (16) dans la position de travail, l'un des éléments supports (60) et l'un des éléments de butée (66) collaborent au sens d'un mouvement de pivotement du col de rotule (16) dans une première orientation (58) à laquelle s'opposent l'autre (50) des éléments supports et l'autre des éléments de butée (56) et que de ce fait les éléments de butée (56, 66) et les éléments supports (50, 60) peuvent s'appuyer les uns contre les autres sans jeu.

13. Attelage de remorque selon l'une des revendications précédentes, **caractérisé par le fait que**, pour fixer le col de rotule (16) dans la position de travail, les éléments de butée (56, 66) et les éléments supports (50, 60) peuvent être serrés les uns contre les autres dans une position de serrage.

14. Attelage de remorque selon l'une des revendications précédentes, **caractérisé par le fait que**, dans la position de serrage, un accumulateur élastique de force de serrage (126) agit sur l'un (60) des éléments (60, 66).

15. Attelage de remorque selon l'une quelconque des revendications précédentes, **caractérisé par le fait que** les éléments de butée (56, 66) peuvent se déplacer en tournant autour de l'axe de pivotement (12) sur différents chemins (55, 65).

16. Attelage de remorque selon l'une des revendications précédentes, **caractérisé par le fait qu'**un premier des éléments de butée (56) est conçu sous forme d'élément solidairement disposé sur la partie pivotante (14).

17. Attelage de remorque selon la revendication 16, **caractérisé par le fait qu'**un second des éléments de butée (66) est conçu sous forme d'élément solidairement disposé sur la partie pivotante (14).

18. Attelage de remorque selon l'une des revendications précédentes, **caractérisé par le fait que** l'un (66) des éléments de butée (56, 66) est disposé sur une crête (68) de la partie pivotante (14).

19. Attelage de remorque selon l'une des revendications précédentes, **caractérisé par le fait qu'**un autre (56) des éléments de butée (56, 66) est disposé sur un appendice du col de rotule (16) relié à la partie pivotante (14).

20. Attelage de remorque selon l'une des revendications précédentes, **caractérisé par le fait qu'**un premier (50) des éléments supports (50, 60) est disposé dans une zone (42) arrière, vu selon le sens de la circulation, de la partie portante (10).

21. Attelage de remorque selon l'une des revendications précédentes, **caractérisé par le fait que** l'élément support mobile (60) peut, par coulissement linéaire, se déplacer dans le chemin (65) de l'élément de butée correspondant (66).

22. Attelage de remorque selon l'une des revendications précédentes, **caractérisé par le fait que** pour déplacer l'élément support (60) entre la position de libération et la position de verrouillage est prévu le dispositif de manoeuvre (80), et que le dispositif de manoeuvre (80) comporte un coin de positionnement (84) qui agit sur l'élément support (60) guidé dans un guidage (74).
